# EUROPÄISCHE PATENTANMELDUNG

(11) **EP 4 362 299 A1**
(43) Veröffentlichungstag der Anmeldung: **01.05.2024**
(21) Anmeldenummer: 22203673.3
(22) Anmeldetag: 25.10.2022
(51) Int. Cl.: H02K 15/00, H02K 15/06, H02K 15/12, H02K 3/12

(54) **VERFAHREN UND WERKZEUG ZUR HERSTELLUNG EINER KOMPAKTEN SPULENBAUGRUPPE EINES ELEKTROMOTORS FÜR EINE BOHRLOCHPUMPE**

(71) Anmelder: WILO SE, 44263 Dortmund (DE)
(72) Erfinder: Höke, Daniel, 44263 Dortmund (DE); Drubel, Oliver, 44263 Dortmund (DE); Kohler, Henry, 44263 Dortmund (DE); Ummelmann, Roland, 44263 Dortmund (DE); Döhler, Heiko, 44263 Dortmund (DE); Unger, Heiko, 44263 Dortmund (DE); Netsch, Volker, 44263 Dortmund (DE); Meier-Wagner, Michael, 44263 Dortmund (DE); Vogt, Martin, 44263 Dortmund (DE); Raeder, Dino, 44263 Dortmund (DE); Lux, Marco, 44263 Dortmund (DE)
(74) Vertreter: Cohausz Hannig Borkowski Wißgott

(57) **Zusammenfassung**

Verfahren und Werkzeug (50, 51) zur Herstellung eines Spulenbauelements (5) eines Elektromotors für eine Bohrlochpumpe mit einem Statorblechpaket (1), das eine Innenbohrung (9) zur Aufnahme eines Rotors (13) und radial nach innen offene Nuten (4, 4a) aufweist. Jede Nute ist durch einen Statorzahn (3) von der folgenden getrennt und weist elektrische Leiter (11) von Spulen (6) auf. Die Spulen formen eine verteilte Wicklung mit jeweils einem Wickelkopf (7) am axialen Ende. Das Spulenbauelement (5) wird durch Formung und Vergießen der Spulen (6) innerhalb des Werkzeugs (50, 51) hergestellt, indem jede Spule (6) einzeln gewickelt wird, dann Spulenbündel in das Werkzeug (50, 51) eingezogen und danach darin vergossen werden. Wobei sich ein Wickelkopf (7) nur zwischen einem inneren Durchmesser (dᵢ) und einem äußeren Durchmesser (dₐ) erstreckt, der kleiner als der Durchmesser (D_{b}) der Statorinnenbohrung (9) ist, um ein axiales Einziehen des Spulenbauelements (5) in das Statorblechpaket (1) zu ermöglichen.

## Beschreibung

Die Erfindung betrifft ein Verfahren zur Herstellung eines Spulenpakets eines Elektromotors für eine Bohrlochpumpe mit einem Statorpaket, das eine Statorbohrung zur Aufnahme eines Rotors und radial nach Innen offene Nuten aufweist, die jeweils durch einen Statorzahn voneinander getrennt sind und in denen elektrische Leiter von Spulen des Spulenpakets einliegen, die verteilte Wicklungen und an einem axialen Ende des Spulenpakets einen Wickelkopf bilden. Ferner betrifft die Erfindung ein Werkzeug zur Herstellung des Spulenpakets aus verteilten Wicklungen zum axialen Einsetzen in das Statorpaket des Elektromotors.

Bohrlochpumpen haben eine längliche, im Wesentlichen zylindrische Bauform. Sie besitzen einen Pumpenkopf, der von einem Elektromotor angetrieben wird, wobei der Pumpenkopf und der Elektromotor in einem gemeinsamen, zylindrischen Gehäuse untergebracht sind oder in verschiedenen Gehäusen mit nahezu gleichem Außendurchmesser einliegen, um ihrem Einsatzzweck entsprechend in ein Bohrloch eingebracht werden zu können. Der Außendurchmesser einer Bohrlochpumpe definiert somit ihren Einsatzbereich. Er ist im Vergleich zur axialen Länge der Bohrlochpumpe gering, häufig kleiner als 20cm. Bohrlochpumpen mit Motoren unterschiedlicher Leistung unterscheiden sich deshalb bei gleichem Außendurchmesser in der Regel durch unterschiedliche Motorlängen, die beispielsweise bis zu 1,5m betragen, um eine gewünschte Leistung bereitstellen zu können.

Des Weiteren wirkt auf die Elektromotoren ein hoher Druck von bis zu 50 bar, weshalb hohe Anforderungen an die Qualität von Bohrlochpumpen und deren Elektromotoren gestellt werden. Da Lufteinschlüsse in Bohrlochpumpen aufgrund des wirkenden Drucks nachteilig sind, werden deren Motoren in Nassläuferbauweise ausgeführt. Das bedeutet, dass der Rotor, der üblicherweise in der Art eines Synchronmotors mit Permanentmagneten ausgestattet ist, in der zu fördernden oder einer anderen Flüssigkeit dreht. Der Stator ist in der Regel vergossen oder ebenfalls von der zu fördernden Flüssigkeit geflutet.

In der gefluteten Variante sind die in den Statornuten einliegenden elektrischen Leiter üblicherweise so genannte "Seekabel". Dabei handelt es sich um kunststoffummantelte und damit wasserdichte Adernbündel aus Kupfer, deren Kunststoffisolierung eine relativ große radiale Dicke von ca. 0,5mm aufweist, so dass ein 1mm dickes Adernbündel zu einem Gesamtdurchmesser des Seekabels von ca. 2mm anwächst. Daraus folgt, dass ein hoher Anteil des Nutenquerschnitts für die Isolierung benötigt wird oder anders betrachtet aufgrund der Isolierung der Seekabel nicht mit Kupfer gefüllt werden kann. Folgemäßig hat diese Variante einen geringeren Füllfaktor und benötigt deshalb zur Erreichung einer bestimmten Leistung eine größere axiale Baulänge, als ein Elektromotor mit einem vergossenen Stator, der wegen des Vergusses auf eine Kunststoffummantelung der elektrischen Leiter verzichten kann, wodurch mehr elektrische Leiter im Nutenquerschnitt Platz finden können. Elektromotoren mit vergossenem Stator haben deshalb eine höhere Leistungsdichte bei größerem Kupferquerschnitt in einer Statornut.

Das zum Vergießen verwendete Material ist üblicherweise ein Gießharz, dass die Hohlräume zwischen den unummantelten elektrischen Leitern sowie den elektrischen Leitern und dem Statorpaket ausfüllt. Das Vergießen der elektrischen Leiter erfolgt direkt im Statorpaket, so dass das Gießharz auch das Statorpaket benetzt, gegebenenfalls in diesen zumindest teilweise eindringt, wenn dieses wie üblich aus einzelnen Blechen besteht, und/oder das Statorpaket sogar ganz verkapselt. Der Stator bildet also eine Einheit, in der die Spulen vergossen sind.

Ein Nachteil der vergossenen Variante ist die fehlende Reparierbarkeit des Elektromotors, da der elektrische Teil des Stators nicht zerstörungsfrei vom rein mechanischen Teil, d.h. dem Statorpaket getrennt werden kann. Vielmehr muss der Stator im Falle eines Defekts im Ganzen entsorgt werden, was dahingehend nachteilig ist, als dass kein sortenreines recyceln möglich ist.

Die mit Seekabeln gewickelten Motoren sind demgegenüber reparierbar, indem die Seekabel entfernt und das Statorpaket einfach mit neuen Seekabeln neu bewickelt wird, jedoch sind sie Kabel sehr teuer und führen, wie bereits ausgeführt, zu einem geringeren Füllgrad bzw. Kupferquerschnitt in den Nuten und folgemäßig bei gleicher Leistung im Vergleich zum vergossenen Typ zu einer größeren axialen Baulänge des Motors respektive der Bohrlochpumpe. Folglich ist es gegenwärtig nicht möglich, Bohrlochpumpen mit einem größeren Kupferquerschnitt in den Nuten wieder zu bewickeln.

Es ist deshalb eine Aufgabe der vorliegenden Erfindung, zumindest einen Teil der vorgenannten Nachteile zu überwinden und ein Verfahren und ein Werkzeug bereitzustellen, das die Herstellung eines Spulenpakets für den Elektromotor einer Bohrlochpumpe mit vergossenen verteilten Wicklungen ermöglicht, welches auswechselbar axial in das Statorpaket des Elektromotors eingefügt werden kann.

Diese Aufgabe wird durch das Verfahren gemäß Anspruch 1 und das Werkzeug gemäß Anspruch 9 gelöst. Vorteilhafte Weiterbildungen des Verfahrens und des Werkzeugs sind in den entsprechenden Unteransprüchen angegeben und werden nachfolgend erläutert.

Erfindungsgemäß wird ein Verfahren zur Herstellung eines Spulenpakets eines Elektromotors für eine Bohrlochpumpe mit einem Statorpaket vorgeschlagen, das eine Statorbohrung zur Aufnahme eines Rotors und radial nach Innen offene Nuten aufweist, die jeweils durch einen Statorzahn voneinander getrennt sind und in denen elektrische Leiter, insbesondere aus Runddraht, von Spulen des Spulenpakets einliegen, die verteilte Wicklungen und an einem axialen Ende des Spulenpakets einen Wickelkopf bilden. Das Spulenpaket wird durch Formung und Vergießen der Spulen innerhalb eines Werkzeugs derart hergestellt, dass sich der Wickelkopf nur zwischen einem inneren Durchmesser und einem äußeren Durchmesser erstreckt, der kleiner als der Durchmesser der Statorbohrung ist, um ein axiales Einfügen des Spulenpakets in das Statorpaket mit voreilendem Wickelkopf zu ermöglichen, wobei die Spulen jeweils einzeln gewickelt und als Drahtbündel in das Werkzeug eingezogen und darin vergossen werden.

Der Elektromotor kann durch folgende Schritte hergestellt werden:
- Bereitstellen eines Statorpakets, das eine Statorbohrung zur Aufnahme eines Rotors und radial nach Innen offene Nuten aufweist, die jeweils durch einen Statorzahn voneinander getrennt sind,
- Herstellen eines Spulenpakets durch Formung und Vergießen von Spulen, die aus elektrischen Leitern, insbesondere aus Runddraht, derart gewickelt werden, dass die Spulen verteilte Wicklungen und an einem axialen Ende des Spulenpakets einen Wickelkopf bilden, der sich nur zwischen einem inneren Durchmesser und einem äußeren Durchmesser erstreckt, der kleiner als der Durchmesser der Statorbohrung ist, und
- axiales Einfügen des Spulenpakets in das Statorpaket mit voreilendem Wickelkopf, so dass die Spulen in den Nuten zum Einliegen gelangen.

Der Kern der Erfindung besteht somit darin, das Spulenpaket ex situ herzustellen und anschließend als Ganzes in den Stator axial einzuschieben. Die Spulen werden also nicht einzeln eingeschoben. Um das axiale Einschieben zu ermöglichen, wird der Wickelkopf gegenüber den Statornuten, respektive gegenüber den Statorzähnen radial nach Innen in die Statorbohrung versetzt, so dass der Wickelkopf nicht in der Flucht der Statorzähne liegt oder, mit anderen Worten, so dass sich die Statorzähne und der Wickelkopf beim axialen Fügen nicht behindern. Das Spulenpaket kann somit einfach in das Statorpaket eingesetzt werden. Es kann außerdem aus dem Stator auch einfach wieder herausgezogen werden und ist somit im Falle eines Defekts auswechselbar.

Als Wickelkopf ist jener Teil der Gesamtheit aller Spulen eines mit verteilten Wicklungen ausgebildeten Elektromotors zu verstehen, der an einem axialen Ende des Stators liegt und in dem die axialseitigen Spulenabschnitte der einzelnen Spulen axial übereinanderliegen, um von einer Nut in eine andere Nut zu gelangen.

Als verteilte Wicklung ist jene Wicklungsart einer Spule einer Phase zu verstehen, deren Windungen auf wenigstens zwei Statornuten verteilt sind, die räumlich durch mehr als einen Statorzahn voneinander getrennt sind. Mit anderen Worten liegen die wenigstens zwei Statornuten in voneinander beabstandeten Winkelabschnitten der Statorbohrung, wobei zwischen den besagten Winkelabschnitten weitere Winkelabschnitte mit Nuten existieren, in denen die Windungen der Spulen der anderen Phasen einliegen. Beispielsweise liegen die besagten zwei Statornuten im Falle einer zweipoligen, 3-phasigen Maschine in einander gegenüberliegenden Winkelabschnitten von je 60°. Somit ist eine verteilte Wicklung von einer konzentrierten Wicklung zu unterschieden, die um einen einzigen Statorzahn gewickelt ist bzw. deren Windungen um diesen herum angeordnet sind.

Das Spulenpaket gemäß der Erfindung hat den Vorteil, dass es mit seinen vergossenen verteilten Wicklungen vorgefertigt werden kann und axial in das Statorpaket einschiebbar ist. Dies ermöglicht eine einfache, schnelle und kostengünstige Herstellung sowie Reparatur von Elektromotoren von Bohrlochpumpen mit verteilten Wicklungen, respektive von Bohrlochpumpen als solche.

Das vorgeschlagene neue Motordesign mit seinen außerhalb des Statorpakets gefertigten, vergossenen Spulen kombiniert die hohe Leistungsdichte gekapselter Systeme mit der Möglichkeit, die Statorwicklung bzw. das Spulenpaket bei Bedarf zu ersetzen. Aufgrund des neuartigen Spulenpakets ist die Herrichtung des Stators mitsamt der Spulen bzw. dem Spulenpaket außerdem schneller als das Neubewickeln des Statorpakets mittels Seekabeln.

Zur Herstellung der Spulen wird sinnvollerweise ein unummantelter Wickeldraht verwendet, um den Nutquerschnitt maximal mit stromführenden Leitern auszufüllen.

In bekannter Weise kann ein Wickeldraht aus Kupfer verwendet werden, der mit einem Isolierlack beschichtet ist. Alternativ könnte auch ein Draht aus einem anderen Metall, beispielsweise aus Aluminium verwendet werden.

Um die Herstellung der Spulen einfach zu halten, ist der Wickeldraht in bekannter Weise ein Runddraht, idealerweise mit einem Durchmesser zwischen 0,6mm und 2mm.

Der Wickeldraht wird verwendet, um eine Anzahl einzelner Spulen mit einer Anzahl an Windungen durch entsprechendes Wickeln des Drahts entlang eines geschlossenen Rings zu erzeugen. Gegebenenfalls kann die Spule gleichzeitig, zumindest annährend, in die benötigte Spulenform gebracht werden. Sofern die durch das Wickeln selbst erreichte Spulenform noch nicht für den Einsatz im Statorpaket geeignet ist, kann eine gewickelte Spule (Rohspule) durch einen mechanischen Formgebungsprozess in die benötigte Spulenendform gebracht werden.

Durch die Verwendung eines selbstklebenden Wickeldrahts können die gewickelten Spulen formstabilisiert werden. Gegebenenfalls kann der Wickeldraht mit einem Backlack beschichtet sein. Durch Erhitzen der Spule nach dem Wickeln verbacken die Windungen miteinander, was ebenfalls eine Formstabilisierung der Spulen bewirkt.

Die gewickelten, gegebenenfalls geformten, und gegebenenfalls formstabilisierten Spulen werden anschließend vergossen, um den Isolationsanforderungen in der Bohrlochpumpe zu genügen.

Erfindungsgemäß werden die Spulen einzeln hergestellt und anschließend gemeinsam samt Wickelkopf vergossen, und zwar innerhalb desselben Werkzeugs. Dabei können alle Spulen gemeinsam vergossen werden, so dass ein einteiliger Vergusskörper entsteht, der axial in das Statorpaket eingesetzt wird. Alternativ kann nur ein Teil der Spulen vergossen werden, beispielsweise alle derselben Phase zugehörigen Spulen, so dass ein mehrteiliger, beispielsweise dreiteiliger Vergusskörper entsteht. Dieser mehrteilige Vergusskörper kann anschließend zusammengesetzt und in dieser zusammengesetzten Form axial in das Statorpaket eingesetzt werden. Das Spulenpaket kann also aus einem mehrteiligen Vergusskörper aus axial ineinander gesetzten Teilvergusskörpern gebildet sein, wobei in jedem Teilvergusskörper vorzugsweise alle Spulen einer Phase gemeinsam vergossen sind.

Die Spulen weisen in allen Varianten seitens des Wickelkopfes bzw. des ersten Wickelkopfes jeweils wenigstens auf:
- einen ersten radialen Abschnitt, der an einen aus einer ersten Nut des Statorpakets austretenden ersten Spulenlängsabschnitt anschließt,
- zumindest einen bogenförmigen Abschnitt, der mit dem ersten radialen Abschnitt verbunden ist und sich entlang eines Kreisbogens zu einer zweiten Nut des Statorpakets erstreckt, in der ein zweiter Spulenlängsabschnitt einliegt, und
- einen zweiten radialen Abschnitt, über den der bogenförmige Abschnitt mit dem zweiten Spulenlängsabschnitt verbunden ist.

Der erste radiale Abschnitt sorgt für eine Umlenkung des Spulenverlaufs von der axialen Richtung aus der Nut kommend, hin zur Motorachse, in den ringförmigen Bereich zwischen dem inneren Durchmesser und dem äußeren Durchmesser hinein, damit der Wickelkopf nicht in der Flucht der Statorzähne liegt. Der zweite radiale Abschnitt sorgt für eine Umlenkung des Spulenverlaufs aus diesem ringförmigen Bereich zurück in die Flucht der zweiten Nut, um in axialer Richtung weiterzulaufen.

Der bogenförmige Abschnitt liegt vorzugsweise auf einem Kreis um die Statorachse.

Für die Herstellung des Spulenpakets als ein- oder mehrteiliger Vergusskörper wird ein vorteilhaftes Wickelkonzept erreicht, wenn die Spulen in den Nuten derart verteilt einliegen, das eine zweite Spule einer Phase in einer ersten Nut und einer zweiten, zur ersten diametral gegenüberliegenden Nut einliegt, und eine erste und dritte Spule der Phase jeweils in zwei Nuten einliegt, die bezogen auf die zweite Spule in demselben Umfangshalbkreis liegen. Hierdurch wird eine minimale Länge der Wickelkopfabschnitte der zweiten und dritten Spule im Wickelkopf bzw. ersten Wickelkopf erreicht.

Um einen symmetrischen Wickelkopf zu erreichen, kann die zweite Spule aus zwei Teilspulen bestehen oder sich zumindest im Wickelkopfes auf zwei Teilspulen aufteilen, die sich im Wickelkopf in entgegengesetzte Umfangsrichtungen von der ersten Nut zur zweiten Nut erstrecken. Die beiden Teilspulen haben vorzugsweise dieselbe Windungsanzahl, insbesondere die halbe Windungszahl der anderen beiden Spulen. Sie sind in Reihe geschaltet, vorzugsweise mit demselben Wickeldraht kontinuierlich gewickelt, damit die zweite Spule in der Summe dieselbe Windungsanzahl wie die erste und dritte Spule hat.

Der Motor ist bevorzugt dreiphasig. Er kann alternativ fünfphasig sein.

Weiter bevorzugt ist der Motor zweipolig. Er kann jedoch auch vier- oder sogar achtpolig sein.

Jede Phase weist vorzugsweise drei Spulen auf, es können jedoch auch vier oder mehr Spulen pro Phase vorhanden sein.

Die Spulen derselben Phase sind zu einer Spulengruppe parallel oder in Reihe geschaltet. Die Spulengruppen können z. B. im Stern oder Dreieck verschaltet sein.

Die Spulen können einlagig oder zweilagig in den Nuten liegen.

Insgesamt weist ein dreiphasiger Motor mit drei Spulen pro Phase somit neun Spulen auf, so dass der Stator eines solchen Motors bei einer einlagigen Anordnung der Spulen achtzehn Nuten hat. Im Falle einer zweilagigen Anordnung weist der Stator nur neun Nuten auf, da in jeder Nute die Längsabschnitte von zwei Spulen angeordnet sind.

Die Anzahl der Windungen der Spulen kann je nach Nutquerschnitt beliebig gewählt werden, beispielsweise zwischen 20 und 80, vorzugsweise zwischen 40 und 60 liegen, besonders bevorzugt 50 betragen.

Erfindungsgemäß erfolgt die Herstellung des Spulenpakets derart, dass die Spulen jeweils einzeln gewickelt und als Drahtbündel in das Werkzeug eingezogen und darin vergossen werden.

Zur Ausführung des Verfahrens umfasst das Werkzeug zur Herstellung des Spulenpakets aus verteilten Wicklungen zum axialen Einsetzen in das Statorpaket des Elektromotors geeigneterweise einen Wickelträger, der einen zentralen Führungszylinder und beabstandet zu diesem angeordnete, den Statorzähnen anzahlmäßig korrespondierende Lamellen aufweist, so dass zwischen dem Führungszylinder und den Lamellen ein Ringraum besteht, der in axialer Richtung zu einem Einführende offen ist, um wenigstens eine in Form eines Drahtbündels gewickelte Spule aufzunehmen und im Ringraum einen Wickelkopfabschnitt der Spule zu formen, wobei zwischen zwei in Umfangsrichtung benachbarte Lamellen jeweils ein Längshohlraum besteht, um jeweils einen Längsspulenabschnitt der Spule zu formen.

Es kann dann vorgesehen sein, dass
a. eine Spule von dem Einführende aus in den Ringraum derart eingebracht wird, dass sie sich radial durch einen ersten der Längshohlräume in den Ringraum hineinerstreckt, bogenförmig zu einem zweiten Längshohlraum verläuft und radial aus diesem wieder austritt,
b. die Spule anschließend mit einem in den Ringraum einfahrenden, hohlzylindrischen, auf dem Führungszylinder geführten Pressstempel vom Einführende weg zum gegenüberliegenden zweiten Axialende geschoben wird, um dort den im Wickelkopf liegenden Wickelkopfabschnitt der Spule auszubilden,
c. anschließend ein Einziehmittel vom zweiten Axialende radial außen an den Lamellen entlang zum Einführende bewegt wird, um die Spule hochzuklappen und in den ersten und zweite Längshohlraum zu drücken, bis das Einführende erreicht ist, wo sie sich zunehmend spannend außenumfänglich um die Lamellen legt, um einen einen zweiten Wickelkopf mitbildenden zweiten Wickelkopfabschnitt der Spule auszubilden.

Der bogenförmige Abschnitt liegt auf einem Kreis um die Werkzeugachse.

Zur Ausführung von Schritt b. kann das Werkzeug einen in den Ringraum einfahrbaren, hohlzylindrischen und auf dem Führungszylinder geführten Pressstempel aufweisen, um die Spule(n) zu dem dem Einführende gegenüberliegenden zweiten Axialende zu schieben und dort einen einen ersten Wickelkopf des Spulenpakets mitbildenden ersten Wickelkopfabschnitt der Spule(n) auszubilden.

Zur Ausführung von Schritt c. kann das Werkzeug ein Einziehmittel umfassen, das radial außen an den Lamellen entlanggleitend zum Einführende bewegbar ist, um die Spule(n) hochzuklappen. Dabei wird die Spule auch geringfügig in den ersten und zweite Längshohlraum hineingedrückt.

Idealerweise umfasst das Einziehmittel einen Einziehtrichter, der bevorzugt im axialen Querschnitt betrachtet hyperbolisch sein kann. Bei der Bewegung des Einziehtrichters zum Einführende gleitet der außerhalb der Lamellen liegende Teil der Spule(n) an der Innenseite des Einziehtrichters entlang und die Spule wird dadurch parallel zum ersten und zweiten Längshohlraum ausgerichtet. Bevorzugt geht der hyperbolische Teil des Einziehtrichters in einen zylindrischen Abschnitt über, der außen an den Lamellen anliegt. Dies bewirkt, dass die Spule(n), genauer gesagt ihr Längsabschnitt, in den ersten und zweiten Längshohlraum hineingedrückt wird.

Die Schritte a. bis c. können nacheinander für die weiteren Spulen durchgeführt werden. Alternativ kann Schritt a. sogleich für mehrere oder sogar alle Spulen wiederholt und Schritte b. und c. anschließend für alle Spulen gleichzeitig ausgeführt werden.

Nach dem Einziehen und Hochklappen der Spulen kann eine Hülse vom zweiten Axialende aus axial über die Lamellen zum Einführende geschoben werden, die in einer Endposition den zweiten Wickelkopf radial begrenzt, um für diesen eine Gießform zu bilden.

Das Werkzeug kann folglich eine Hülse aufweisen, die außen über die Lamellen zum Einführende in eine Endposition schiebbar ist, um in dieser Endposition einen zweiten, einen zweiten Wickelkopf mitbildenden Wickelkopfabschnitt der Spule(n) zur Bildung einer Gießform zu umgreifen.

Anschließend oder zeitgleich kann eine Verspannungsmechanik mit einer der Anzahl an Längshohlräumen entsprechenden Anzahl an Verschlussstangen, vorzugsweise axial, in die Längshohlräume einfahren, um diese zur Bildung einer Gießform zu verschließen.

Das Werkzeug kann somit eine Verspannungsmechanik aufweisen, mit einer der Anzahl an Längshohlräumen entsprechenden Anzahl an Verschlussstangen, die insbesondere axial in die Längshohlräume einfahrbar sind, um diese zur Bildung einer Gießform zu verschließen.

Die Verspannungsmechanik kann wenigstens einen Spannring aufweisen, um die Verschlussstangen gemeinsam radial in die Längshohlräume zu drücken. Hierzu kann der Spannring die Verschlussstangen entlang eines Außenumfangs umgeben. Um eine gleichmäßige radiale Druckkraft auf die Verschlussstangen zu entwickeln, kann der Spannring in seinem Durchmesser verkleinerbar sein. Die Verspannungsmechanik kann auch zwei oder mehr Spannringe umfassen, die beabstandet zueinander auf unterschiedlichen axialen Höhen des Werkzeugs angeordnet sind.

Sind die Längshohlräume verschlossen, können die Spulen in dem Werkzeug vergossen werden.

Vorzugsweise kann der Führungszylinder seitens des Einführendes einen drehbaren Exzenterkonus aufweisen. Der Exzenterkonus hat eine Mantelfläche, die auf einer Seite steiler als auf der gegenüberliegenden Seite ist. Dies erleichtert die Aufnahme einer Spule am Einführende, genauer gesagt, die Anordnung seines Wickelkopfabschnitts im Ringraum. Der Exzenterkonus kann für das Einbringen der Spule in den Wickelträger in eine Position gedreht werden, in der die weniger steile Seite des Exzenterkonus dem gewünschten bogenförmigen Verlauf der Spule im Ringraum vom ersten zum zweiten Längshohlraum zugewandt ist. Dies erleichtert allgemein das Einsetzen der Spule von oben in den Ringraum bzw. das Formen des bogenförmigen Abschnitts der Spule. Die Spule gleitet den Exzenterkonus entlang in den Ringraum hinein.

Im Besonderen erleichtert der Exzenterkonus das Einsetzen und Formen des bogenförmigen Abschnitts einer Spule bzw. Teilspule, die bestimmungsgemäß in zwei sich diametral gegenüberliegenden Längshohlräumen angeordnet werden soll, indem die Spitze des Exzenterkonus zu einem Durchmesser am Einführende, auf dem die beiden Längshohlräume liegen, versetzt ist. Wäre der Kopf des Führungszylinders ein Kegel, läge dessen Spitze auf dem Durchmesser, so dass eine weitere Maßnahme ergriffen werden müsste, um die Spule auf die rechte oder linke Seite des Kegels zu bringen. Soll sich der bogenförmige Abschnitt der Spule bzw. Teilspule bezogen auf den besagten Durchmesser entlang des linken Halbkreises erstrecken, kann der Exzenterkonus in eine Position gedreht werden, in der seine Spitze gegenüber dem Durchmesser nach rechts versetzt ist. Die weniger steile Seite des Exzenterkonus ist dann folglich nach links gerichtet. Und soll sich der bogenförmige Abschnitt der Spule bzw. Teilspule bezogen auf den besagten Durchmesser entlang des rechten Halbkreises erstrecken, kann der Exzenterkonus in eine Position gedreht werden, in der seine Spitze gegenüber dem Durchmesser nach links versetzt ist. Die weniger steile Seite des Exzenterkonus ist dann folglich nach rechts gerichtet.

Zum Zwecke der Automatisierung ist es vorteilhaft, wenn die Spule oberhalb des Werkzeugs, insbesondere des Einführendes, mittels eines Flyerwicklers zu dem Drahtbündel gewickelt und anschließend in das Werkzeug, insbesondere den Wickelträger fallengelassen wird. Dies erfolgt derart, dass die Spule am Einführende in den besagten ersten und zweiten Längshohlraum hineinfällt. Der Spulenabschnitt zwischen dem ersten und dem zweiten Längshohlraum fällt demgegenüber auf den Exzenterkonus und gleitet an dessen weniger steilen Seite herab in den Ringraum.

Gemäß einer vorteilhaften Weiterbildung kann das Einziehmittel eine den Wickelträger zum Einführende entlang schiebbare Pressring-Aktorik umfassen, die eine der Anzahl der Längshohlräume entsprechende Anzahl ringförmig angeordneter Gleitstempel aufweist, so dass jeder Gleitstempel in einen der Längshohlräume hineinragt, um die Spule(n) radial in den ersten und zweiten Längshohlraum zu drücken. Vorzugsweise ist die Pressring-Aktorik unterhalb des Einziehtrichters angeordnet und ist idealerweise gemeinsam mit dieser zum Einführende bewegbar.

Dabei kann sich jeder Gleitstempel an einem Dämpfungsblock abstützen, zu dem er radial beweglich ist, wobei die Gleitstempel entgegen einer Rückstellkraft in die Dämpfungsblöcke hineingedrückt werden können. Die Dämpfungsblöcke drücken die Gleitstempel radial zur Werkzeugachse und bewirken somit die notwendige Kraft, um die Spule(n) in die Längshohlräume zu drücken.

Weitere Merkmale, Vorteile und Eigenschaften der Erfindung werden nachfolgend anhand von Ausführungsbeispielen und den beigefügten Figuren näher erläutert. In den Figuren bezeichnen identisch Bezugsziffern oder -zeichen identische oder zumindest wirkungsgleiche äquivalente Komponenten, Teile, Fläche oder Richtungen.

Es sei darauf hingewiesen, dass im Rahmen der vorliegenden Beschreibung die Begriffe "aufweisen", "umfassen" oder "beinhalten" keinesfalls das Vorhandensein weiterer Merkmale ausschließen. Ferner schließt die Verwendung des unbestimmten Artikels bei einem Gegenstand nicht dessen Plural aus.

Die in der vorliegenden Beschreibung verwendeten Begriffe oder Wortbestandteile "radial", "axial", "umfänglich" oder "in Umfangsrichtung" beziehen sich allgemein auf die Längsachse des Stators oder des Werkzeugs, sofern nichts Anderes angegeben ist.

Merkmale einer Ausführungsvariante der Erfindung können auch bei einer anderen Ausführungsvariante vorhanden sein, sofern dies nicht technisch ausgeschlossen ist. Zudem können beschriebene Verfahrensmerkmale bei einer der hier beschriebenen Vorrichtungen und beschriebene Vorrichtungsmerkmale bei dem hier beschriebenen Verfahren vorhanden sein.

Es zeigen:
- Fig. 1:: eine Querschnittdarstellung durch ein Statorpaket eines Elektromotors nach dem Stand der Technik
- Fig. 1a:: eine Veranschaulichung der Zuordnung der Nuten des Statorpakets zu den Phasen
- Fig. 1b:: eine schematische Darstellung des Elektromotors in der Art einer Explosionszeichnung
- Fig. 1c:: eine schematische Darstellung eines erfindungsgemäßen Wickelschemas der Spulen
- Fig. 2:: eine perspektivische Darstellung eines zweischichtigen Spulenpakets aus vergossenen Einzelspulen mit Blick auf den geformten, ersten Wickelkopf
- Fig. 3a-3c:: verschiedene Ansichten einer Einzelspule des Spulenpakets nach Fig. 2
- Fig. 4:: eine perspektivische Darstellung eines anderen zweischichtigen Spulenpakets aus vergossenen Einzelspulen
- Fig. 5a-5b:: zwei verschiedene Ansichten einer Einzelspule des Spulenpakets nach Fig. 4
- Fig. 6a-6b:: Momentaufnahmen beim Zusammenfügen von Einzelspulen gemäß Figuren 5a, 5b zu dem Spulenpaket gemäß Figur 4
- Fig. 7a-7d:: Momentaufnahmen beim axialen Zusammenfügen von Statorpaket und Spulenpaket gemäß Fig. 4
- Fig. 8a-8c:: verschiedene perspektivische Darstellungen eines einschichtigen Spulenpakets aus vergossenen Einzelspulen gemäß einer weiteren Ausführungsvariante
- Fig. 9a-9c:: ein Werkzeug zum Einziehen und Vergießen von Spulen in einem radialen Querschnitt (Fig. 9a), einem axialen Querschnitt (Fig. 9b) entlang der Schnittlinie A-A gemäß Fig. 9a und in einer Explosionsdarstellung (Fig. 9c)
- Fig. 10a:: eine Ansicht eines Versuchswerkzeugs nach Fig. 9a-c mit eingezogenen Spulen
- Fig. 10b:: eine Ansicht des Versuchswerkzeugs nach Fig. 9a-c mit übergestülpter erster Hülse
- Fig. 11a-11b:: Ansichten des Spulenpakets als Vergusskörper ohne (Fig. 11a) und mit axial aufgeschobenem Stator (Fig. 11b)
- Fig. 11c-11d:: Ansichten des Vergusskörpers gemäß Fig. 11a mit Blick auf den radial innen liegenden, ersten Wickelkopf (Fig. 11c) und den radial außen liegenden, zweiten Wickelkopf (Fig. 11d)
- Fig. 12a-12f:: verschiedene Momentaufnahmen eines Werkzeugs bei der Ausführung eines erfindungsgemäßen Verfahrens zur Herstellung des Statorpakets durch Einziehen und Umklappen der Spulen
- Fig. 13a-13b:: Längsschnitte durch das Werkzeug zum Einziehen und Umklappen der Spulen zu dem in Fig. 12d gezeigten Zeitpunkt (Fig. 13a) und dem in Fig. 12f gezeigten Zeitpunkt (Fig. 13b)
- Fig. 13c:: eine perspektivische Ansicht der Pressring-Aktorik aus Fig. 12c
- Fig. 13d:: eine Einzeldarstellung einer Leit- und Faltelement Anordnung der Pressring-Aktorik aus Fig. 12c
- Fig. 13e:: ein durch Einziehen und Umklappen mittels des Werkzeugs in Fig. 12c erfindungsgemäß hergestelltes, vergossenes Spulenpaket
- Fig. 13f:: eine Draufsicht auf die Verspannungsmechanik des Werkzeugs in Fig. 12c
- Fig. 13g:: eine Draufsicht auf das Werkzeug in Fig. 12c mit drei Spulen einer Phase
- Fig. 14a-14c:: ein Werkzeug zum Nadelwickeln und Vergießen der Spulen einer einzigen Phase in einer ersten (Fig. 14a) und einer zweiten (Fig. 14b) perspektivischen Ansicht, und in einer Draufsicht (Fig. 14c)
- Fig. 14d-14e:: vergrößerte Darstellungen der axialen Enden des Werkzeugs gemäß Fig. 14a-14c
- Fig. 15a:: eine perspektivische Ansicht des Werkzeugs zum Nadelwickeln und Vergießen der Spulen mit isolierten Längshohlräumen
- Fig. 15b- 15c:: Ansichten des Werkzeugs gemäß Fig. 15a mit Blick auf den verschalteten, zweiten Wickelkopf, mit einer ersten eingezogenen Spule (Fig. 15b) und zwei eingezogenen Spulen (Fig. 15c).

Nachfolgend werden Ausführungsbeispiele für den Aufbau eines Elektromotors für eine Bohrlochpumpe mit einem erfindungsgemäßen Spulenpaket 5 erläutert.

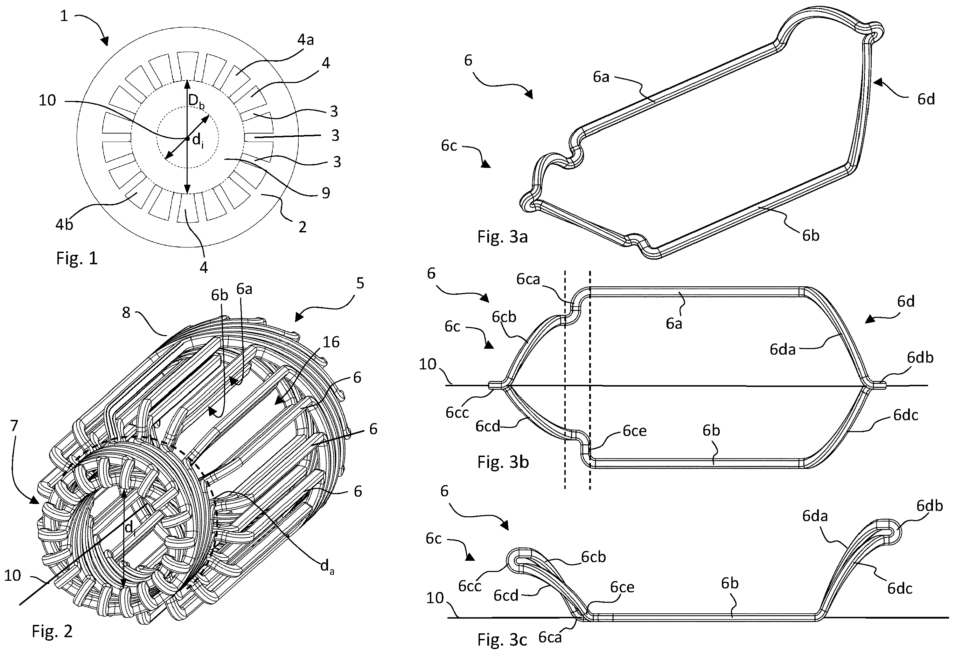

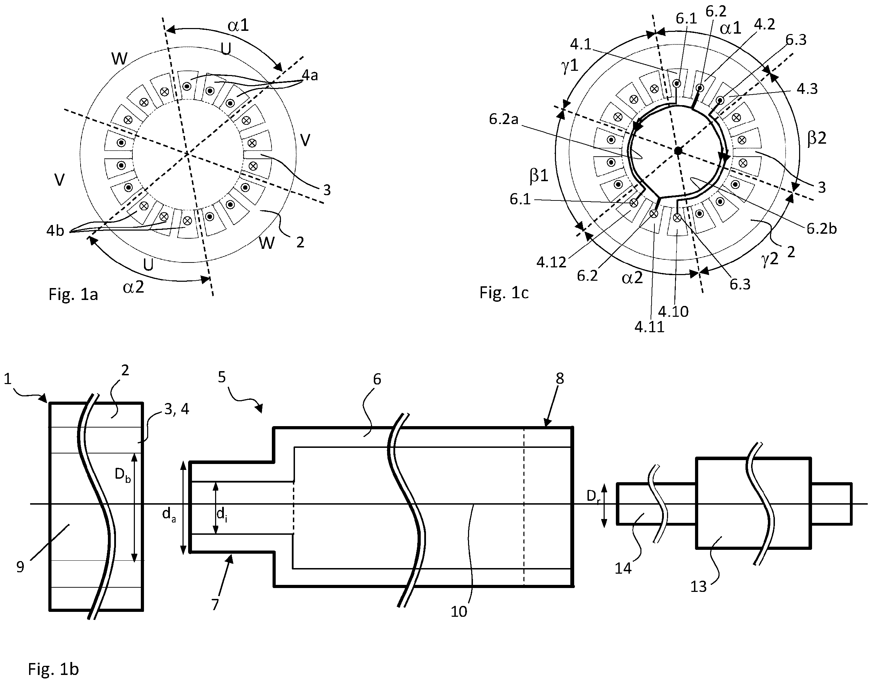

Der Elektromotor weist einen aus einem mechanischen Statorpaket 1 und einem elektrischen Spulenpaket 5 gebildeten Stator auf. Das Statorpaket 1 besitzt eine Statorbohrung 9 mit einem Durchmesser D_{b} zur Aufnahme eines auf einer Motorwelle 14 montierten Rotors 13 und radial nach innen, genauer gesagt zur Statorbohrung 9 hin offene Nuten 4, die in Umfangsrichtung zu den beiden Seiten durch je einen Statorzahn 3 begrenzt sind, so dass sich die Statorzähne 3 und die Statornuten 4 entlang des Innenumfangs des Statorpakets 1 abwechseln. Ein solches Statorpaket 1 ist in Figur 1 gezeigt und allgemein bekannt. Es besteht in axialer Richtung aus einer Anzahl gegeneinander isolierter Bleche. Die Statorzähne 3 gehen an ihrem radial außenliegenden Ende in einen Rückschlussring 2 über, im Fachjargon auch Joch genannt. Die Statorzähne 3 können mit dem Rückschlussring 2 einstückig sein oder daran befestigt sein, beispielsweise über einen Formschluss wie z.B. einer Schwalbenschwanzverbindung. Rein beispielhaft sind bei dem Statorpaket 1 in Figur 1 achtzehn Nuten 4 vorhanden, es können jedoch auch mehr oder weniger Nuten 4 sein.

Zur Ausbildung des Elektromotors als Induktionsmotor, im einfachsten Fall eines von drei Phasen U, V, W gespeisten Drehstrommotors, weist dieser ein Spulenpaket 5 mit Spulen 6 aus elektrischen Leitern 11 auf, die durch sogenannte verteilte Wicklungen gebildet sind. Bei einer verteilten Wicklung erstreckt sich die entsprechende Spule 6 einer Phase U respektive deren elektrische Leiter 11, innerhalb einer ersten Nut 4a und einer zweiten Nut 4b, die durch mehrere Statorzähne 3 voneinander beabstandet sind, so dass zwischen der ersten und zweiten Nut 4a, 4b weitere Nuten 3 liegen, in denen die Spulen 6 anderer Phasen V, W angeordnet sind. Bei einem zweipoligen Elektromotor liegen die erste Nut 4a und zweite Nut 4b im einfachsten Fall einander gegenüber oder sind zumindest innerhalb einander gegenüberliegenden Winkelabschnitten α1, α2 des Statorumfangs angeordnet, die derselben Phase U, V, W zugeordnet sind, siehe Fig. 1a. Im Falle eines vierpoligen Elektromotors sind diese Winkelabschnitte um 90° zu einander versetzt.

Fig. 1a zeigt die Zuordnung der Spulen 6 zu den Phasen U, V, W und Nuten bei einem zweipoligen Motor. In den X Nuten 4 sind eine Anzahl X/2 an Spulen 6 angeordnet, d.h. in dem vorliegenden Beispiel mit X=18 Nuten sind neun Spulen 6 vorhanden. Jeweils drei dieser Spulen sind einer Phase U, V, W zugeordnet, parallelgeschaltet und bilden somit eine Gruppe. Die Gruppen sind elektrisch miteinander verschaltet beispielsweise im Stern oder Dreieck. Jede Gruppe bzw. Phase U, V, W ist auf zwei gegenüberliegende Winkelabschnitte α1, α2 aufgeteilt.

Das Statorpaket 1 besitzt ein erstes axiales Ende und ein zweites axiales Ende. Es kann eine Länge zwischen 30 cm und 1,50 m aufweisen. Die Spulen 6 bilden in den hier dargestellten Ausführungsvarianten an beiden axialen Enden des Statorpakets 1 respektive des Spulenpakets 5 jeweils einen Wickelkopf 7, 8, um von der ersten Nut 4a in die zweite Nut 4b überzugehen. Ein Wickelkopf 7, 8 entsteht somit dadurch, dass die an einem axialen Ende des Spulenpakets 5 liegenden Spulenabschnitte 6c, 6d, verschiedener Spulen 6 aneinander anliegen, genauer gesagt zumindest teilweise axial übereinanderliegen.

Der erfindungsgemäße Kerngedanke besteht darin, das Spulenpaket 5 aus vergossenen Einzelspulen oder als Vergusskörper mit darin eingebetteten Spulen auszubilden, allerdings gegenüber dem Stand der Technik in einer vom Statorpaket 1 unabhängigen Weise. Die Herstellung des Spulenpakets, d.h. dem elektrischen Teil des Stators, erfolgt also außerhalb des Statorpakets. Anschließend wird das Spulenpaket 5 axial in die Nuten 4 des Statorpakets 1 eingeschoben. Um dies zu erreichen, ist erfindungsgemäß vorgesehen, dass sich ein erster der beiden Wickelköpfe 7, nachfolgend auch als geformter Wickelkopf 7 bezeichnet, nur zwischen einem inneren Durchmesser dᵢ und einem äußeren Durchmesser dₐ erstreckt, wobei der äußere Durchmesser dₐ kleiner als der Durchmesser D_{b} der Statorbohrung 9 ist. Der geformte Wickelkopf 7 ist somit gegenüber den Statorzähnen 3 radial nach innen zur Motorachse 10 hin versetzt und gibt damit den Weg frei, um die Statorzähne 3 beim axialen Fügen zwischen die vergossenen Spulen 6 zu schieben, wie Figur 1b veranschaulicht und nachfolgend vertieft wird.

Entsprechend umfasst ein Verfahren zur Herstellung eines Elektromotors die Schritte:
- Bereitstellen eines Statorpakets 1, das eine Statorbohrung 9 zur Aufnahme eines Rotors und radial nach Innen offene Nuten 4 aufweist, die jeweils durch einen Statorzahn 3 voneinander getrennt sind,
- Herstellen eines Spulenpakets 5 aus vergossenen Spulen 6 oder durch Vergießen von Spulen, die aus elektrischen Leitern 11 aus Runddraht (Wickeldraht) derart gewickelt werden, dass die Spulen 6 verteilte Wicklungen und an einem axialen Ende des Spulenpakets 5 wenigstens einen Wickelkopf 7 bilden, der sich nur zwischen einem inneren Durchmesser dᵢ und einem äußeren Durchmesser dₐ erstreckt, wobei der äußere Durchmesser dₐ kleiner als der Durchmesser D_{b} der Statorbohrung 9 ist, und
- axiales Einfügen des Spulenpakets 5 in das Statorpaket 1 mit voreilendem Wickelkopf 7, so dass die Spulen 6 in den Nuten 4 zum Einliegen gelangen.

Eine Spule 6 ist aus einem kontinuierlichen N-fach gewundenen Wickeldraht hergestellt. Somit ist jede Spule 6 ein Drahtbündel aus N Windungen, beispielsweise 50 Windungen, so dass im Querschnitt betrachtet N einzelne Drähte die Spule 6 bilden, die jedoch genau betrachtet Abschnitte des kontinuierlichen Wickeldrahts sind. Die einzelnen Drähte respektive Drahtabschnitte sind die elektrischen Leiter der Spule 6. Der Wickeldraht ist in üblicherweise ein mit einem Isolierlack beschichteter Runddraht aus Kupfer mit einem Durchmesser zwischen 0,6mm und 2mm.

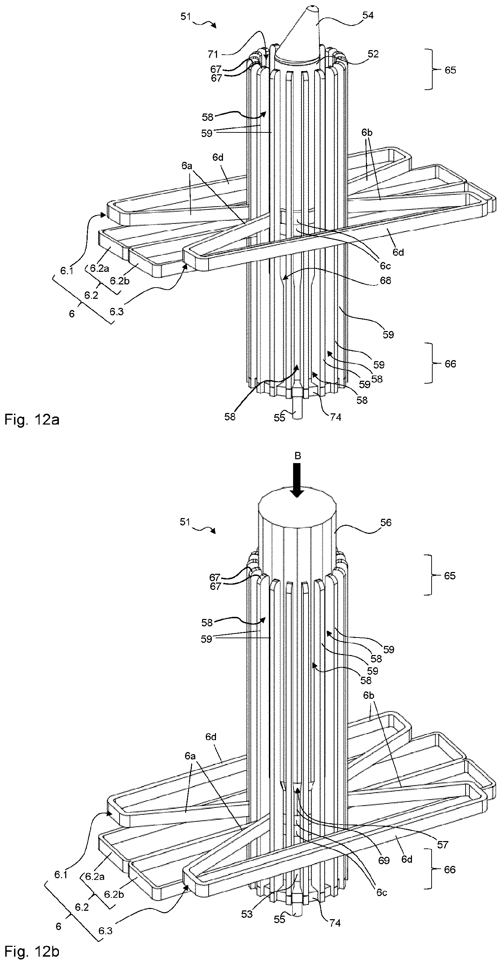

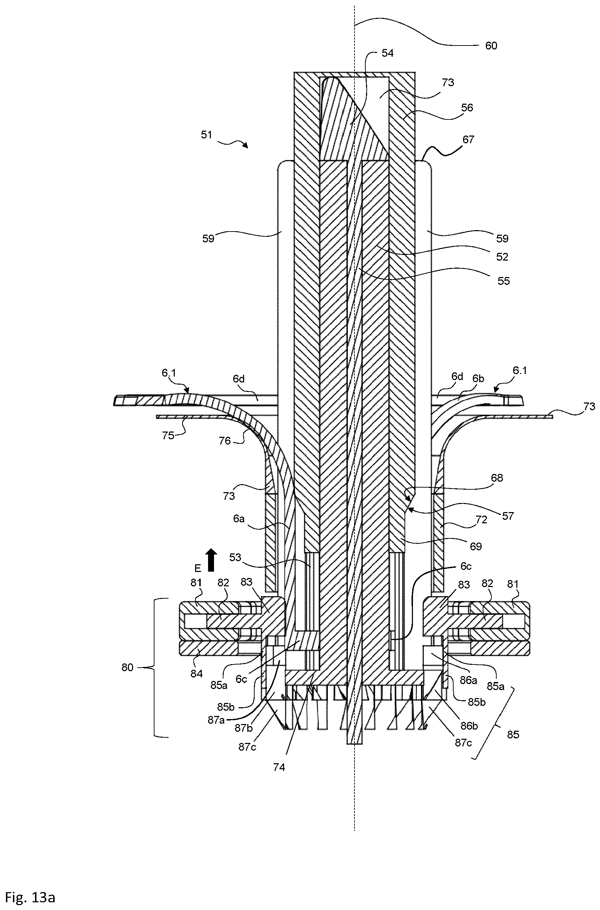

Es werden nachfolgend vier verschiedene Verfahren zur Herstellung des Spulenpakets 5 als Vergusskörper beschrieben, bei denen sich auch die Spulenpakete 5 selbst hinsichtlich der Wickelköpfe 7, 8 untereinander unterscheiden. Das dritte, nachfolgend als "Einzieh-/ Falttechnik" bezeichnete Verfahren, einschließlich des in Figuren 12a-f und 13a-g dargestellten Werkzeugs sind Gegenstand der Ansprüche.

### Vergossene Einzelspulen

Ein erstes Verfahren sieht vor, das Spulenpaket 5 aus einzeln vergossenen Spulen 6 herzustellen, die anschließend zur Ausbildung des Spulenpakets 5 ineinander geschachtelt werden. Figur 2 zeigt einen Ausschnitt eines auf diese Weise hergestellten Spulenpakets 5 mit Blick auf den ersten Wickelkopf 7, der im Rahmen der vorliegenden Beschreibung auch als geformter Wickelkopf 7 bezeichnet wird. Das Spulenpaket 5 umfasst hier 18 Spulen 6, so dass jede Spule 6 in zwei Nuten 4 einliegt aber jede Nut 4 zwei Spulen 6 aufnimmt, die radial betrachtet in einer Oberwicklung und einer Unterwicklung liegen. Mit anderen Worten ist das Spulenpaket hier zweischichtig aufgebaut. Eine Spule 6 dieses Spulenpakets ist in verschiedenen Ansichten in den Figuren 3a bis 3c gezeigt. In dieser Ausführungsvariante sind die Spulen 6 alle gleich geformt.

Jede Spule besteht im Wesentlichen aus vier Spulenabschnitten, nämlich einem ersten und zweiten Längsspulenabschnitt 6a und einem ersten und zweite Wickelkopfabschnitt 6c, 6d. Die beiden Längsspulenabschnitte 6a, 6b verlaufen parallel und liegen sich radial gegenüber. Die beiden Wickelkopfabschnitte 6c, 6d liegen sich axial gegenüber.

Der erste Längsspulenabschnitt 6a erstreckt sich innerhalb der ersten Nut 4a axial vom zweiten Wickelkopf 8 hin zum ersten Wickelkopf 7, wohingegen sich der zweite Längsspulenabschnitt 6b innerhalb der zweiten Nut 4b axial vom ersten Wickelkopf 7 zurück zum zweiten Wickelkopf 8 erstreckt. Allerdings liegen die beiden Längsspulenabschnitte 6a, 6b auf unterschiedlichen Umfangskreisen bezogen auf die Motorachse 10, da der erste Längsspulenabschnitt 6a die Unterwicklung in der ersten Nut 4a und der zweite Längsspulenabschnitt 6b die Oberwicklung in der zweiten Nut 4b bildet und damit radial weiter außen liegt, als der erste Längsspulenabschnitt 6a.

Der erste Wickelkopfabschnitt 6c ist Teil des ersten Wickelkopfes 7 und verbindet das aus der ersten Nut 4a austretende Ende des ersten Längsspulenabschnitts 6a der Spule 6 mit dem in die zweite Nut 4b eintretenden Ende des zweiten Längsspulenabschnitts 6b. Entsprechend ist der zweite Wickelkopfabschnitt 6d ist Teil des zweiten Wickelkopfes 8 und verbindet das aus der zweiten Nut 4b austretende Ende des zweiten Längsspulenabschnitts 6b der Spule 6 mit dem in die erste Nut 4a eintretenden Ende des ersten Längsspulenabschnitts 6b.

Wesentlich ist hierbei die Form des ersten Wickelkopfabschnitts 6c, die in den Fig. 3a-3c erkennbar ist und in der Art einer "gekröpften Stirnverbindung" ausgeführt ist. Er besteht aus fünf ineinander übergehenden Abschnitte, umfassend einen ersten S-förmigen Abschnitt 6ca, der an den ersten Längsspulenabschnitt 6a anschließt, einen ersten bogenförmigen Abschnitt 6cb, einen zentralen U-förmigen Abschnitt 6cc, einen zweiten bogenförmigen Abschnitt 6cd und einen zweiten S-förmigen Abschnitt 6ce, der an den zweiten Längsspulenabschnitt 6b anschließt.

Durch den ersten S-förmigen Abschnitt 6ca wird der Spulenverlauf von der axialen Richtung des ersten Längsspulenabschnitts 6a kommend, radial nach innen umgeleitet, damit die Spule 6 aus der Flucht der entsprechenden Statornut 4 herauskommt, oder anders betrachtet, die die Nut flankierenden Statorzähne 3 radial überragt. Anschließend erfolgt in dieser Ausführungsvariante eine weitere Umleitung aus der radialen Richtung zurück in die axiale Richtung, allerdings auf einem Umfangskreis mit einem Durchmesser da, der kleiner als der Durchmesser Db der Statorbohrung 9 ist.

Der sich an den ersten S-förmigen Abschnitt 6ca anschließende erste bogenförmige Abschnitt 6cb erstreckt sich entlang eines Kreisbogens in Umfangsrichtung um die Motorachse 10, wobei er sich zusätzlich in axialer Richtung vom Statorkörper 1 weg erhebt, damit Raum für die Wickelkopfabschnitte 6c der anderen Spulen 6 geschaffen wird. Der U-förmige Abschnitt 6cc verbindet mit seinen sich axial vom Statorkörper 1 weg erstreckenden Schenkeln die beiden bogenförmigen Abschnitte 6cb, 6cd etwa im mittleren Bereich des Wickelkopfabschnitts 6c. Dabei liegt der sich an den ersten bogenförmigen Abschnitt 6cb anschließende Schenkel radial außen und der sich an den zweiten bogenförmigen Abschnitt 6cd anschließende Schenkel radial weiter innen bezogen auf die Motorachse 10, vergleiche Figuren 3b und 3c. Der U-förmige Abschnitt 6cc liegt somit in einer die Motorachse 10 schneidenden Axialebene.

Der zweite bogenförmige Abschnitt 6cd und der zweite S-förmige Abschnitt 6ce sind im Wesentlichen symmetrische Pendants zum ersten bogenförmigen Abschnitt 6cb und ersten S-förmigen Abschnitt 6ca. Allerdings erstreckt sich der zweite bogenförmige Abschnitt 6cd entlang eines Kreisbogens um die Motorachse 10 mit einem kleineren Durchmesser bzw. Radius, als der Kreisbogen des ersten bogenförmigen Abschnitts 6cb. Ferner endet der zweite bogenförmige Abschnitt 6cd axial in Richtung des Statorpakets 1 versetzt gegenüber dem ersten bogenförmigen Abschnitt 6cb, siehe Fig. 3b.

Der zweite Wickelkopfabschnitt 6d besteht aus drei ineinander übergehenden Abschnitten, umfassend einen ersten bogenförmigen Abschnitt 6da, der an den ersten Längsspulenabschnitt 6a anschließt, einen zentralen U-förmigen Abschnitt 6db und einen zweiten bogenförmigen Abschnitt 6dc, der an den zweiten Längsspulenabschnitt 6b anschließt. Somit ist der zweite Wickelkopfabschnitt ebenfalls in der Art einer gekröpften Stirnverbindung ausgeführt. Es fehlt bei dem zweiten Wickelkopfabschnitt 6d im Vergleich zum ersten Wickelkopfabschnitt 6c die Umlenkung des Spulenverlaufs radial nach innen, so das der zweite Wickelkopfabschnitt 6d, genauer gesagt die bogenförmigen Abschnitte 6da und 6dc axial vor den Statorzähnen 3 liegt/ liegen. Der U-förmige Abschnitt 6db liegt dadurch radial weiter außen, so dass der Innendurchmesser des zweiten Wickelkopfes 8 größer als der Außendurchmesser des Rotors 13 ist, damit dieser beim axialen Fügen am zweiten Wickelkopf 8 vorbeikommt.

Alles Spulen 6 sind identisch geformt, so dass dasselbe Form- und Vergusswerkzeug verwendet werden kann und beim Zusammensetzen der einzelnen Spulen zu dem Spulenpaket keine besondere Reihenfolge der Spulen berücksichtigt werden muss.

Nach dem Wickeln der Spule wird das so hergestellte Drahtbündel mit einem Isolationsmaterial umwickelt und in die in Figuren 3a, 3b und 3c gezeigte Form gebracht, insbesondere gebogen. Alternativ kann der Draht auch zunächst in Form gebracht und anschließend mit dem Isolationsmaterial umwickelt werden. Als Isolationsmaterial kann in diesem Fall eine Bandage, ein Tape, eine Kordel oder ein Spiralschlauch dienen, wobei das Isolationsmaterial spiralförmig um das Drahtbündel herum gelegt wird. Das Wickeln der Spule 6 kann gemäß einer anderen Variante auch direkt in der gewünschten Form erfolgen, so dass kein separater Formungsschritt erforderlich ist.

Das gewickelte und mit dem Isolationsmaterial versehene Drahtbündel wird anschließend in eine Gießform eingelegt, und darin mit einer Vergussmasse vergossen. Das Isolationsmaterial stellt sicher, dass die Spule 6 allseitig mit einer ausreichenden Dicke an Vergussmasse bedeckt ist, da es als Distanzelement zur Gießform dient. Als Vergussmasse kann beispielsweise ein Gießharz verwendet werden.

Alternativ zu dem vorgenannten Umwickeln des Drahtbündels mit dem Isolationsmaterial kann die Gießform mit einem solchen Isolationsmaterial, beispielsweise in Form eines Isolationspapiers ausgekleidet sein. Das Drahtbündel kann in das Papier hineingelegt und dieser über das Drahtbündel gelegt werden, so dass es das Drahtbündel vollumfänglich umschließt.

Gemäß einer anderen Herstellungsweise ist es auch möglich, dass die Gießform gleichzeitig zur Erzeugung der gewünschten Form der Spule 6 verwendet wird. Somit erfolgt das in Form bringen des Drahtbündels direkt durch Einlegen und Anpassen an die Gießform. Des Weiteren ist es möglich, dass das Wickeln bzw. das legen der Windungen des Wickeldrahts direkt in der Gießform erfolgt, so dass ein separater Formungsschritt entfällt.

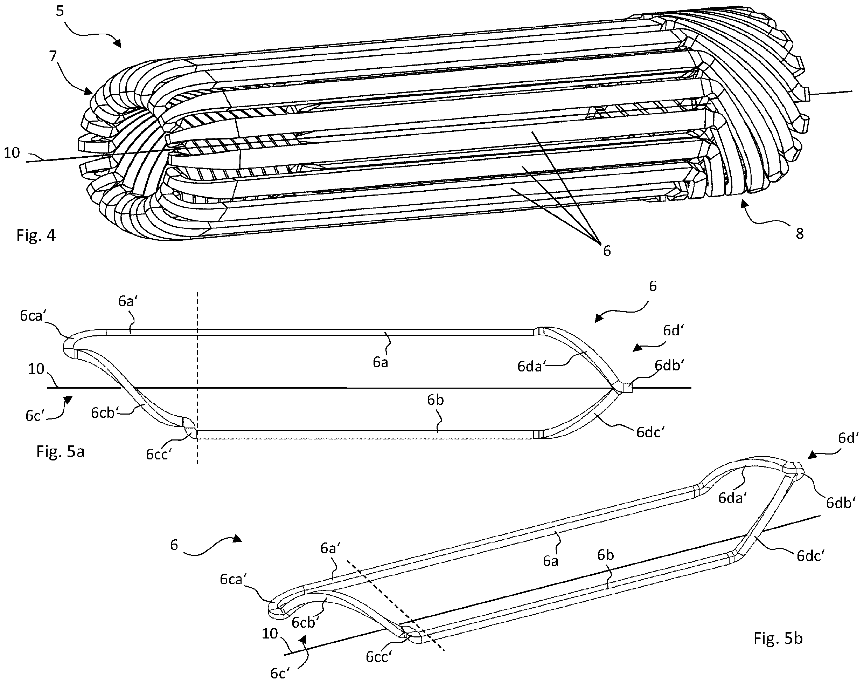

Figur 4 zeigt eine zur Fig. 2 alternative Ausführungsvariante eines Spulenpakets 5. Das Spulenpaket 5 ist hier ebenfalls zweischichtig aufgebaut und umfasst 18 Spulen, so dass in jeder Nut 4 zwei Spulen 6 in der Art einer Oberwicklung und einer Unterwicklung einliegen.

Die Form der einzelnen Spulen 6 dieser alternativen Ausführungsvariante ist in Fig. 5a und 5b gezeigt. Sie unterscheidet sich gegenüber der ersten Variante in den Fig. 2 und 3a-3c dahingehend, dass seitens des ersten Wickelkopfes 7 ein U-förmiger Abschnitt radial außen liegt und insoweit auf den ersten S-förmigen Abschnitt 6ca seitens des Wickelkopfes 7 der ersten Variante verzichtet werden kann. Insgesamt hat das Spulenpaket 5 hier eine torpedoartige Form. Auch hier besteht jede Spule 6 im Wesentlichen aus vier Spulenabschnitten, nämlich einem ersten und zweiten Längsspulenabschnitt 6a und einem ersten und zweite Wickelkopfabschnitt 6c', 6d'. Nachfolgend werden nur die Unterschiede der zweiten Variante gegenüber der ersten Variante hervorgehoben.

Der erste Wickelkopfabschnitt 6c', besteht aus vier ineinander übergehenden Abschnitten, umfassend einen geraden Abschnitt 6a', der eine Verlängerung des ersten Längsspulenabschnitts 6a bildet, einen U-förmigen Abschnitt 6ca', der an den geraden Abschnitt 6a' anschließt, einen bogenförmigen Abschnitt 6cb' und einen S-förmigen Abschnitt 6cc', der an den zweiten Längsspulenabschnitt 6b anschließt, siehe Fig. 5a, 5b. Der U-förmige Abschnitt 6ca' steht aufgrund des geraden Abschnitts 6a' axial gegenüber dem S-förmigen Abschnitt 6cc' vor. Der gerade Abschnitt 6a' geht in einen Schenkel des U-förmigen Abschnitts 6ca', dessen anderer Schenkel radial weiter innen liegt, so dass der U-förmige Abschnitt 6ca' in einer die Motorachse 10 einschließenden Axialebene liegt. Der zweite Schenkel des U-förmigen Abschnitts 6ca' führt den Spulenverlauf wieder in axialer Richtung zurück in Richtung des Statorpakets 1 und geht dann in den bogenförmigen Abschnitt 6cb' über, der sich in Umfangsrichtung entlang eines Kreisbogens erstreckt und dabei den axialen Versatz zwischen dem U-förmigen Abschnitt 6ca' und dem S-förmigen Abschnitt 6cc' überwindet. Der bogenförmige Abschnitt 6cb' hat somit auch hier einen helikalen Verlauf. Der Kreisbogen liegt auf einem Durchmesser dₐ, der kleiner ist, als der Durchmesser D_{b} der Statorbohrung 9. Somit liegt der bogenförmige Abschnitt 6cb' nicht in der Flucht irgendwelcher Statornuten 4 oder Statorzähne 3, was die axiale Fügbarkeit des Spulenpakets 5 relativ zum Statorpaket 1 gewährleistet. Ferner endet der bogenförmige Abschnitt 6cb' dadurch mit einem radialen Abstand vor dem zweiten Längsspulenabschnitt 6b. Dieser Abstand wird durch den S-förmigen Abschnitt 6cc' überbrückt.

Der zweite Wickelkopfabschnitt 6d ist im Wesentlichen gleich geformt, wie bei der ersten Ausführungsvariante und besteht aus einem ersten bogenförmigen Abschnitt 6da', einem U-förmigen Abschnitt 6db' und einem zweiten bogenförmigen Abschnitt 6dc', wobei der U-förmige Abschnitt 6db' etwa mittig zwischen den bogenförmigen Abschnitten 6da', 6dc' liegt und sich mit seinen Schenkeln innerhalb einer Axialebene durch die Motorachse 10 erstreckt. Diese Axialebene ist hier gegenüber der Axialebene, innerhalb der sich der U-förmige Abschnitt 6ca' des ersten Wickelkopfabschnitts 6c' erstreckt, um etwa 90° versetzt. Der erste bogenförmigen Abschnitt 6da' erstreckt sich entlang eines ersten Kreisbogens und der zweite bogenförmige Abschnitt 6dc' entlang eines zweiten Kreisbogens, der radial weiter Innen gegenüber dem ersten Kreisbogen verläuft.

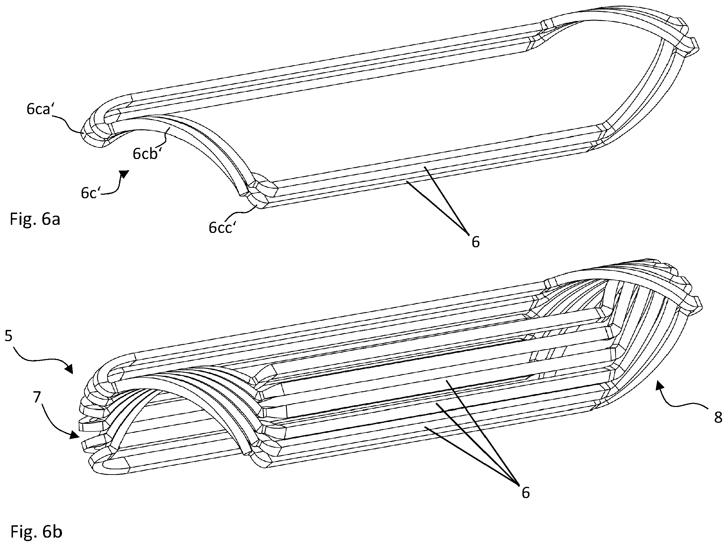

Fig. 6a und 6b zeigen zwei Momentaufnahmen der Anordnung von Spulen 6 zur Bildung des Spulenpakets 5, indem die einzelnen Spulen 6 ineinander geschachtelt werden. Dabei liegen in Fig. 6a zwei Spulen 6 und in Fig. 6b sechs Spulen 6 nebeneinander. Es wird deutlich, dass die bogenförmigen Abschnitte 6cb' der Spulen 6 axial übereinanderliegen genauer betrachtet sogar axial zur Anlage gelangen.

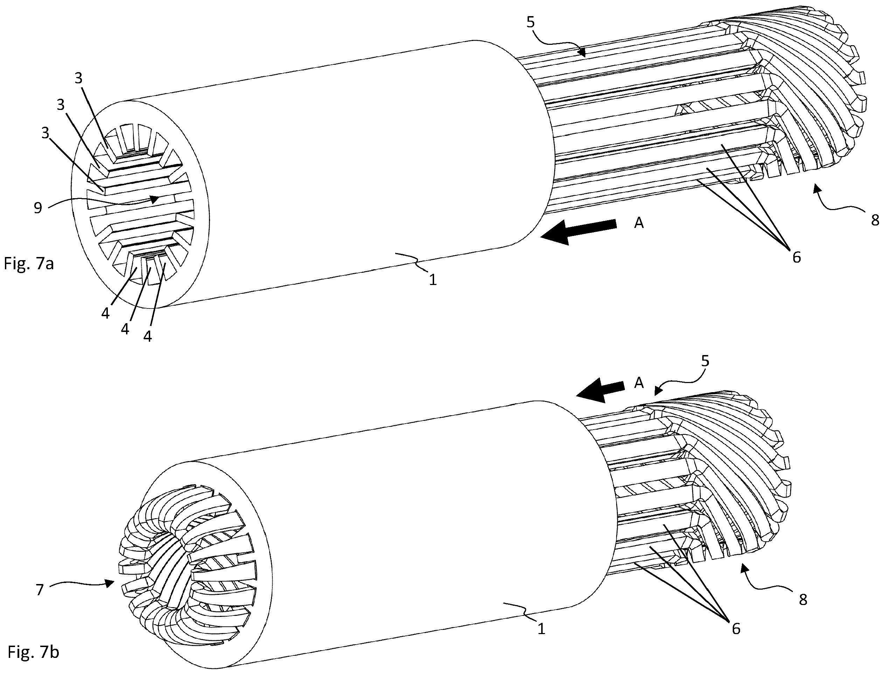

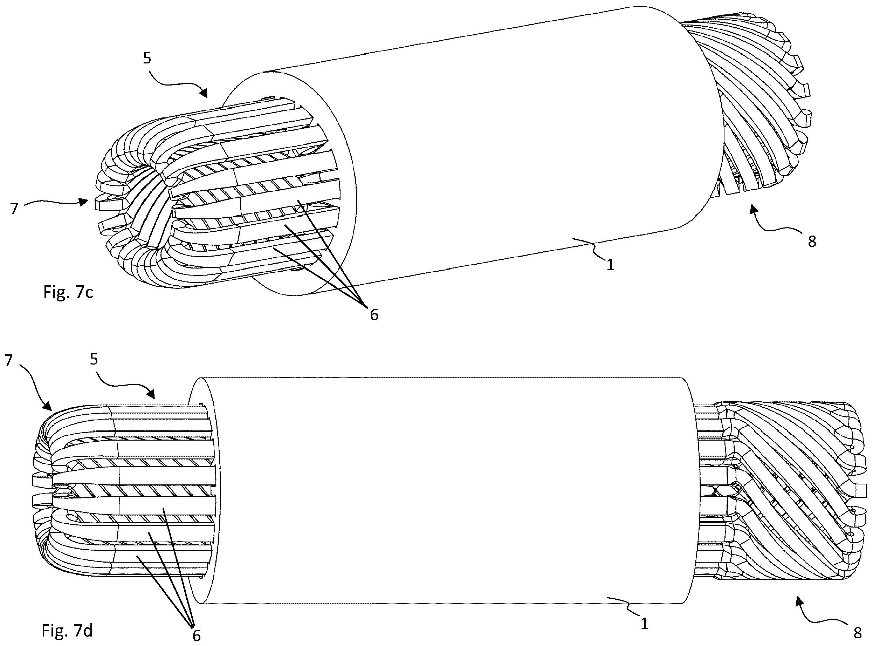

Fig. 7a bis 7d veranschaulichen den Fügeprozess des Spulenpakets 5 relativ zum Statorpaket 1, wobei hier das Spulenpaket 5 in Richtung des Pfeils A in Fig. 7a axial in das Statorpaket 1 mit dem ersten Wickelkopf 7 voran hineingeschoben wird. In Fig. 7b schaut der erste Wickelkopf 7b bereits ein wenig axial aus dem Statorpaket 1 hervor. Fig. 7b zeigt, wie die Statorzähne 3 in die Zwischenräume zwischen benachbarten Spulen 6 des Statorpakets 5 eingreifen. In Fig. 7c ist das Statorpaket 1 fast in seiner endgültigen Position relativ zum Spulenpaket 5 positioniert. In Fig 7d ist die Endposition erreicht. Fig. 7c und 7d zeigen, dass der erste Wickelkopf 7 eine beachtliche axiale Länge besitzt.

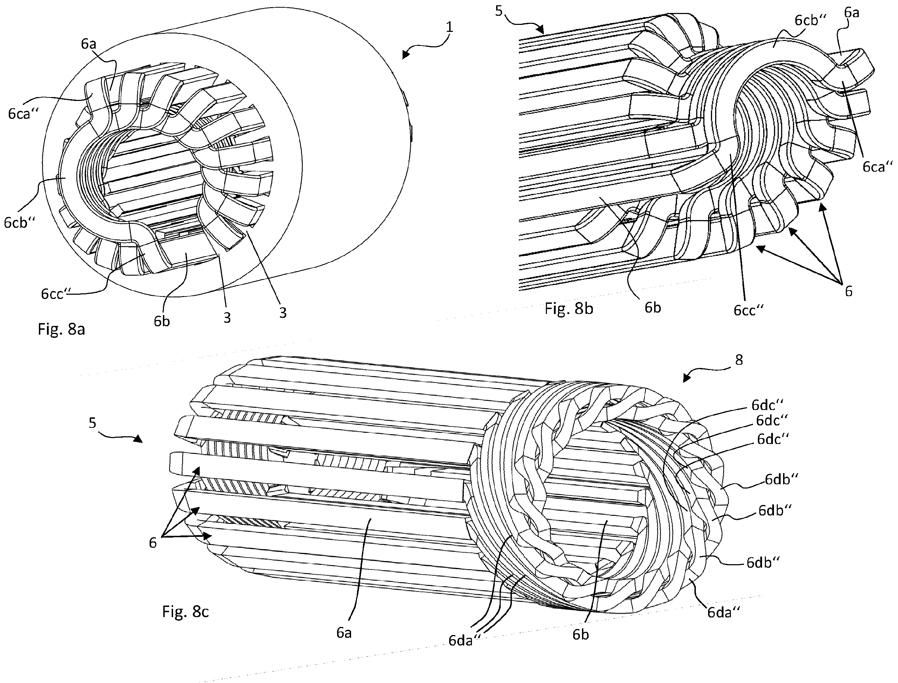

Eine dritte Ausführungsvariante eines Spulenpakets 5 mit einzelnen vergossenen Spulen 6 ist in den Fig. 8a bis 8c veranschaulicht. Das Spulenpaket 5 umfasst hier neun Spulen 6, so dass jede Spule 6 in zwei Nuten 4 einliegt und in jeder Nut 4 genau eine Spule 6 einliegt. Das Spulenpaket 5 ist somit einschichtig. Bei dieser dritten Ausführungsvariante sind die Spulen 6 alle voneinander verschieden, indem sie unterschiedliche axialen Längen besitzen, und der zweite Wickelkopf 7 unsymmetrisch ist.

Bei jeder der Spulen 6 ist der erste Wickelkopfabschnitt 6c aus drei ineinander übergehende Abschnitten gebildet, nämlich einem ersten radialen Abschnitt 6ca", einem bogenförmigen Abschnitt 6cb" und einem zweiten radialen Abschnitt 6cc". Der erste radiale Abschnitt 6ca" schließt an den ersten Spulenlängsabschnitt 6a an und leitet den Spulenverlauf aus der axialen Richtung kommend radial nach innen in Richtung Motorachse 10 und anschließend in Umfangsrichtung um. An den ersten radialen Abschnitt 6ca" schließt sich der bogenförmige Abschnitt 6cb" an, der sich entlang eines Kreisbogens mit einem Durchmesser dₐ erstreckt, der kleiner ist, als der Durchmesser D_{b} der Statorbohrung 9. Der bogenförmige Abschnitt 6cb" unterscheidet sich gegenüber den bogenförmigen Abschnitten 6cb, 6cd, 6db' der Varianten 1 und 2 darin, dass er nicht helikal verläuft, d.h. sich nicht in axialer Richtung erstreckt, sondern innerhalb derselben Radialebene bleibt. Dies bedingt letztendlich die unterschiedlichen axialen Längen der Spulen 6. Der zweite radiale Abschnitt 6ca" schließt an den bogenförmigen Abschnitt 6cb" an und leitet den Spulenverlauf von der Umfangsrichtung kommend in radialer Richtung und weiter in axialer Richtung um, um in den zweiten Längsspulenabschnitt 6b überzugehen.

Bei dem zweiten Wickelkopf 8 der dritten Variante sind die zweiten Wickelkopfabschnitte 6d der Spulen 6 ebenfalls durch drei Abschnitte 6da", 6db", 6dc" gebildet, nämlich einem ersten bogenförmigen Abschnitt 6da", einem Übergangsabschnitt 6db" und einem zweiten bogenförmigen Abschnitt 6dc", wobei der Übergangsabschnitt 6db" zwischen dem ersten und dem zweiten bogenförmigen Abschnitt 6da", 6dc" liegt. Der erste bogenförmige Abschnitt 6da" schließt sich an den ersten Spulenlängsabschnitt 6a an und verläuft helikal entlang eines Kreisbogens auf einem ersten Umfangskreis um die Motorachse 10 zum Übergangsabschnitt 6db", der einen flachen Übergang zu einem radial weiter innen liegenden Umfangskreis um die Motorachse 10 kleineren Durchmessers bildet. Entlang eines Kreisbogens auf diesem zweiten Umfangskreis verläuft der zweite bogenförmige Abschnitt 6dc" helikal bzw. axial zurück in Richtung Statorpaket 1 und schließt an den zweiten Spulenlängsabschnitt 6b an, siehe Fig. 8c.

Während sich die Spulenform bei den dargestellten Varianten unterscheidet, ist das Verfahren zur Herstellung der gewickelten und einzeln vergossenen Spulen identisch, so dass diesbezüglich auf die Ausführungen zur ersten Variante verwiesen wird.

### Einziehtechnik

Ein zweites Verfahren sieht vor, die Spulen 6 einzeln zu wickeln, d.h. die N Windungen zu legen, und die so hergestellten Drahtbündel in ein Einziehwerkzeug zu legen. Bereits durch dieses Einlegen erhalten die Drahtbündel eine Form, die annährend der gewünschten Endform der Spule 6 entspricht. Mittels Pressstempel kann das Drahtbündel dann in dem Einziehwerkzeug in die Endform gebracht werden. Dies kann nacheinander für jede Spule einzeln, für eine Spulengruppe, beispielsweise für alle derselben Phase zugehörigen Spulen, oder sogar für alle Spulen 6 gleichzeitig erfolgen.

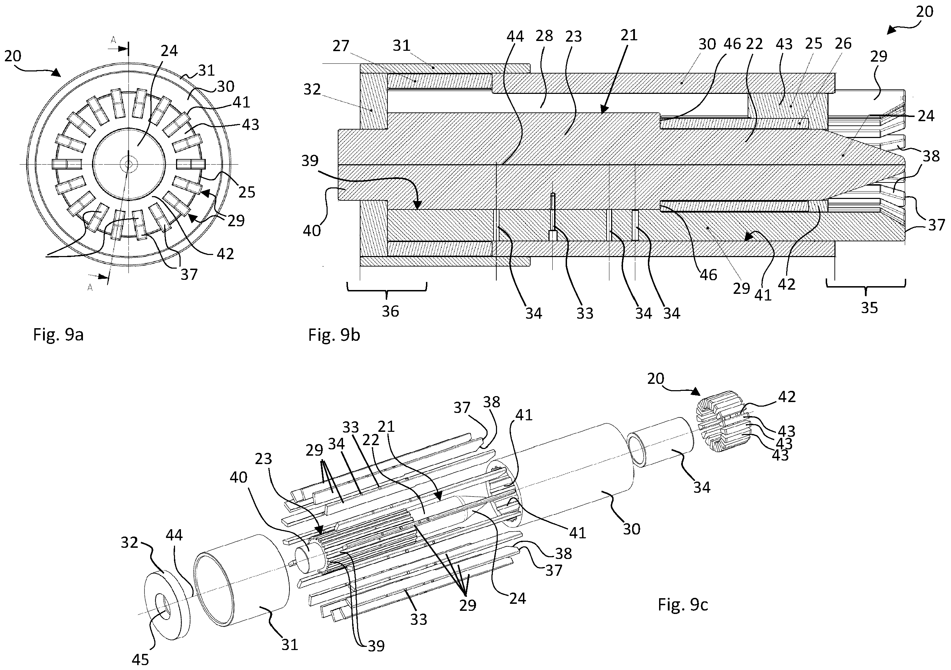

Ein geeignetes Einzieh- und Vergusswerkzeug 20 ist in den Figuren 9a bis 9c dargestellt. Fig. 9a bis 9c zeigen das Einzieh- und Vergusswerkzeug 20 in einer Draufsicht (Fig. 9a), einem Schnitt (Fig. 9b) entlang der Schnittlinie A-A gemäß Fig. 9a und in einer Explosionsdarstellung (Fig. 9c).

Das Einzieh- und Vergusswerkzeug 20, nachfolgend kurz Werkzeug 20 genannt, umfasst als zentrales Element einen länglichen Wickelträger 21 mit einem vorderen axialen Ende 35 und einem hinteren axialen Ende 36. Der Wickelträger 21 besteht aus einem vorderen Wickelträgerabschnitt 22 und einem hinteren Wickelträgerabschnitt 23, die jeweils durch einen Kreiszylinder gebildet sind. Der vordere Wickelträgerabschnitt 23 besitzt einen geringeren Durchmesser, als der hintere Wickelträgerabschnitt 23, so dass der vordere Wickelträgerabschnitt 23 gegenüber dem hinteren Wickelträgerabschnitt 23 unter Bildung eines Ringraums zurückspringt, der zur Aufnahme des ersten Wickelkopfs 7 dient. Ein stufenförmiger Übergang 46 besteht zwischen den beiden Abschnitten 22, 23 des Wickelträgers 21. Während in der dargestellten Ausführungsvariante der vordere und hintere Wickelträgerabschnitt 22, 23 einstückig sind, können diese in einer anderen Ausführungsvariante separate Bauteile bilden, die aneinander befestigt sind.

Am vorderen Axialende 35 besitzt der Wickelträger 21 einen Konus 24 in Gestalt eines Kegels. Er vereinfacht das Einziehen der Spulen 6 in das Werkzeug 20 und deren Formung im Bereich des ersten Wickelkopfs 7. Der Konus 24 kann alternativ ein separates, an dem vorderen Wickelträgerabschnitt 22 angesetztes Bauteil sein.

Der hintere Wickelträgerabschnitt 23 besitzt an seinem axialen Ende einen Zapfen 40, der durch einen Rücksprung des hinteren Wickelträgerabschnitts 23 gebildet ist. Der Zapfen 40 ist somit einstückig mit dem hinteren Wickelträgerabschnitt 23. Er könnte jedoch auch ein separates Bauteil sein, das an den hinteren Wickelträgerabschnitt 23 montiert ist.

Wie Fig. 9c zu erkennen gibt, ist der Außenumfang des hinteren Wickelträgerabschnitts 23 mit sich axial und parallel zur Werkzeugachse 44 erstreckenden Längsnuten 39 versehen. In jeder dieser Längsnuten 39 liegt formschlüssig eine Lamelle 29 ein, deren Gesamtheit sternförmig vom Wickelträger 21 absteht. Insgesamt umfasst das Werkzeug 20 achtzehn Nuten 39 für entsprechende achtzehn Lamellen 29. Die Lamellen 29 erstrecken sich bis zum axialen Ende des Konus 24. Sie besitzen über ihre gesamte axiale Länge einen rechteckigen Querschnitt. Sie sind mit ihrer schmalen Längsseite an dem hinteren Wickelträgerabschnitt 23 angeschraubt. Hierzu dienen Schrauben, die in entsprechenden Bohrungen 33 der Lamellen 29 einliegen. Die Lamellen 29 besitzen weitere Bohrungen 34 an verschiedenen Stellen entlang ihrer Längserstreckung, die sich durch die Lamellen 29 hindurch erstrecken und mit einem Innengewinde versehen sind. Sie dienen entsprechend der Aufnahme einer Gewindeschraube.

Wird diese maximal weit eingeschraubt, stößt sie zunächst gegen den Wickelträger 21. Ein Weiterdrehen der Gewindeschraube bewirkt dann, dass die entsprechende Lamelle vom Wickelträger 21 abgedrückt wird. Dies hilft, die Lamellen vom Wickelträger 21 zu lösen, wenn diese im Vergusskörper eingebettet sind,

Zwischen jeweils zwei in Umfangsrichtung benachbarten Lamellen 29 ist ein Längshohlraum 28 vorhanden, der der Aufnahme einer Spule 6, genauer betrachtet eines Spulenlängsabschnitts 6a, 6b einer Spule dient. Die Lamellen 29 des Werkzeugs 20 entsprechen den Statorzähnen 3 des Statorpakets 1, wobei die Längshohlräume 28 den Statornuten 4 entsprechen.

Die Lamellen 29 erstrecken sich über den hinteren Wickelträgerabschnitt 23 hinaus, so dass sie unter Bildung des zuvor genannten Ringraums radial beabstandet zum vorderen Wickelträgerabschnitt 22 liegen. Die axialen Stirnseiten 37 der Lamellen 29 besitzen radial innen eine zum Konus 24 geneigte Abflachung 38, so dass sie eine trichterförmige Einführöffnung bilden, welche ebenfalls das Einziehen der Spulen 6 in das Werkzeug 20 vereinfacht.

Das Werkzeug 20 umfasst des Weiteren drei Stempel 25, 26, 27, die axial relativ zum Wickelträger 21 beweglich sind und dazu dienen, durch eine axial ausgeübte Druckkraft eine in das Werkzeug 20 eingezogene Spule 6 in Form zu bringen. Ein erster Stempel 25 und zweiter Stempel 26 bilden gemeinsam eine Stempelanordnung, um den ersten Wickelkopf 7 zu formen und die Spulen 6 im Werkzeug 20 axial nach unten Richtung des hinteren Wickelträgerabschnitts 23. Hierzu sind beide Stempel 25, 26 axial auf dem vorderen Wickelträgerabschnitt 22 geführt.

Der erste Stempel 25 besteht aus einem auf dem vorderen Wickelträgerabschnitt 22 gelagerten Ring 42, an dessen Außenumfang radial vorspringende Zähne 43 angeformt sind, die sich außerdem in axialer Richtung über den Ring 42 hinaus zum hinteren Wickelträgerabschnitt 23 erstrecken. Zwei in Umfangsrichtung benachbarte Zähne 43 definieren jeweils einen nutartigen Raumbereich, in dem bestimmungsgemäß eine der Lamellen 29 formschlüssig einliegt. In korrespondierender Weise erstreckt sich jeder der Zähne 43 formschlüssig in einen der zwischen zwei in Umfangsrichtung benachbarten Lamellen 29 gebildeten Längshohlräume 28 hinein. Der erste Stempel 25 umgreift die Lamellen 29 somit formschlüssig. Im Querschnitt betrachtet, sind die Zähne trapezförmig und besitzen radial außen eine größere Breite in Umfangsrichtung, als radial innen.

Der zweite Stempel 26 ist eine kreiszylindrische Hülse, die auf dem vorderen Wickelträgerabschnitt 22 gelagert ist. Er stützt sich mit seiner axialen Stirnseite auf der Innenseite des Rings 42 ab, so dass die Zähne 43 den Stempel 26 außenseitig formschlüssig umgreifen. Somit wird eine Presskraft auf den zweiten Stempel 26 ausgeübt, indem der erste Stempel 25 eine axiale Presskraft ausüben.

Der dritte Stempel 27 ist ebenfalls eine kreiszylindrische Hülse. Sie umgreift die Lamellen 29 radial außen, indem sie mit ihrem Innenumfang an den radial außen liegenden Längsseiten der Lamellen 29 anliegt. Auf den dritten Stempel 27 kann auch verzichtet werden. Er ist in Fig. 9c nicht dargestellt.

Durch Ergänzung des Einziehwerkzeugs 20 durch eine erste und zweite Hülse 30, 31 sowie einen Deckel 32 wird es zu einem Vergusswerkzeug 20 vervollständigt, in dem die Spulen 6 drucklos vergossen werden können.

Die erste Hülse 30 ist ein Kreiszylinder, der wie der Stempel 27, alle Lamellen 29 radial außen umgreift, indem er mit seinem Innenumfang an den radial außen liegenden Längsseiten der Lamellen 29 anliegt. Entlang des Innenumfangs weist die Hülse 30 sich axial erstreckende Längsnuten 41 auf, in den denen die Lamellen mit ihren radial außen liegenden Längsseiten formschlüssig einliegen. Die erste Hülse 30 begrenzt also den Längshohlraum 28 in radialer Richtung nach außen, und bildet somit einen Teil der Gießform. Das Vergießen der Spulen 6 erfolgt folglich innerhalb der ersten Hülse 30.

In axialer Richtung sind die Längshohlräume 28 durch den Deckel 32 geschlossen. Er bildet eine Ringscheibe 32, die im montierten Zustand mit ihrer Öffnung 45 auf dem Zapfen 40 aufliegt und bis zum Rücksprung zwischen Zapfen 40 und hinterem Wickelträgerabschnitt 23 geschoben ist, so dass sie an der axialen Stirnseite des hinteren Wickelträgerabschnitts 23 anliegt. Die zweite Hülse 31 ist ebenfalls ein Kreiszylinder. Sie umgreift außenumfänglich sowohl die Ringscheibe 32 als auch das zu dieser gerichtete axiale Ende der ersten Hülse 30. Die zweite Hülse 31 begrenzt den zu vergießenden, den zweiten Wickelkopf 8 aufnehmenden Raumbereich radial nach außen.

Die Verwendung des Werkzeugs 20 ist wie folgt:
Die beiden Hülsen 30, 31 und die drei Stempel 25, 26, 27 sind zunächst entfernt, so dass das Werkzeug 20 als Einziehwerkzeug fungiert. Die Längshohlräume 28 sind radial nach außen und zum vorderen Axialende 35 offen.

Eine Spule wird zunächst zu einem ringförmigen Drahtbündel gewickelt, indem der Wickeldraht in N Schlaufen gelegt wird, die die N Windungen der Spule bilden. Das Drahtbündel wird anschließend mit einem Isolationsmittel isoliert, wie dies zuvor bei der Ausführungsvariante mit den vergossenen Einzelwicklungen erläutert wurde. Es besteht allerdings auch die Möglichkeit, dass die Längshohlräume 28 mit einem Isolationsmittel, beispielsweise einem gefalteten Isolationspapier, ausgekleidet werden, so dass auf eine Isolation des Drahtbündels außerhalb des Werkzeugs 20 verzichtet werden kann. Anschließend wird das Drahtbündel in das Werkzeug 20 eingelegt.

Das Einziehen des Drahtbündels erfolgt am vorderen Axialende 35, indem das Drahtbündel sich radial erstreckend stirnseitig zwischen die ersten zwei Lamellen 29 gedrückt wird, die den ersten Längshohlraum 28 begrenzen, in dem die Spule 6 aufgenommen sein soll. Anschließend wird das Drahtbündel über das vordere Axialende 35 hinweg zu den zweiten zwei Lamellen 29 geführt, die den zweiten Längshohlraum 28 begrenzen, in dem die Spule 6 aufgenommen sein soll. Im Falle eines zweipoligen Elektromotors liegen die ersten zwei Lamellen 29 und zweiten zwei Lamellen 29 in diametral gegenüberliegenden Winkelabschnitten α1, α2, siehe Fig. 1a. Das Drahtbündel wird hierbei an dem Konus 24 vorbeigeführt und, sich radial erstreckend, stirnseitig zwischen die zweiten zwei Lamellen 29 gedrückt. Während dieses Vorgangs hängt der übrige Teil des Drahtbündels außen vor den Lamellen 29.

Das Drahtbündel wird anschließend nach unten gezogen in Richtung des hinteren Axialendes 36, wobei es sich an den Konus 24 anlegt. Der erste und zweite Stempel 25, 26 werden hierbei verwendet, um das Drahtbündel axial in das Werkzeug 20 zu drücken, bis es an dem stufenförmigen Übergang 46 anliegt. Hierbei ist der zweite Stempel 26 auf dem vorderen Wickelträgerabschnitt 22 geführt. Das Drahtbündel tritt am stufenförmigen Übergang 46 aus dem ersten Längshohlraum 28 kommend radial in den zwischen den Lamellen 29 und dem vorderen Wickelträgerabschnitt 22 gebildeten Ringraum ein, der in Fig. 9b vom zweiten Stempel 26 eingenommen wird, verläuft dann innerhalb dieses Ringraums in einer Radialebene bogenförmig zum zweiten Längshohlraum 28, in den sie aus dem Ringraum heraus radial austretend eintritt. Der in dem Ringraum liegende Abschnitt des Drahtbündels entspricht dem ersten Wickelkopfabschnitt 6c in Fig. 3a-3c, 5a, 5b.

Das Drahtbündel wird dann in den ersten und zweiten Längshohlraum 28 gedrückt, so dass es sich axial innerhalb der Längshohlräumen 28 zum hinteren Axialende 36 erstreckt. Die in den Längshohlräumen 28 liegenden Abschnitte des Drahtbündels entsprechenden den Längsspulenabschnitten 6a, 6b in Fig. 3a-3c, 5a, 5b.

Da das Drahtbündel einen geschlossenen Ring bildet, verbleibt der den zweiten Wickelkopfabschnitt 6d in Fig. 3a-3c, 5a, 5b bildende Abschnitt des Drahtbündels während dieses Schrittes radial außenseitig der Lamellen 39. Dies bleibt auch im weiteren Verfahrensverlauf so, so dass der zweite Wickelkopf nicht axial vor den Statorzähnen 3 liegt, wie bei den Varianten 1 bis 3, sondern zu diesen radial versetzt ist und axial vor dem Rückschlussring 2 liegt.

Das Drahtbündel tritt folglich am hinteren Axialende 36 radial aus den beiden Längshohlräumen 28 aus und verläuft dann in Umfangsrichtung radial außen vor den Lamellen vom ersten zum zweiten Längshohlraum 28. Mit Hilfe des dritten Stempels 27 kann das Drahtbündel, genauer gesagt dessen radial außerhalb der Lamellen 29 liegender, zweiter Wickelkopfabschnitt in Richtung Deckel 32 gedrückt werden, bis er an dem Deckel 32 zur Anlage gelangt. Der dritte Stempel 27 wird hierbei von der äußeren Längsseite der Lamellen 29 geführt. Das Drahtbündel wird bei diesem Pressschritt insgesamt gestreckt. Der zweite Wickelkopfabschnitt liegt in einem zweiten Ringraum, der in Fig. 9b von dem dritten Stempel 27 eingenommen ist.

Das beschriebene Verfahren wird für alle Spulen bzw. Drahtbündel wiederholt.

Wie oben beschrieben, umfasst das Werkzeug 20 achtzehn Lamellen 29, sodass auch achtzehn Längshohlräume 28 gebildet sind. Das Werkzeug 20 ist somit für die Herstellung eines Spulenpakets 5 für einen zweipoligen Motor, mit drei Spulen 6 pro Phase U, V, W (siehe Fig. 1a), so dass insgesamt nein Spulen gewickelt und in das Werkzeug 20 eingezogen werden müssen. Selbst verständlich kann das Werkzeug 20 in anderen Ausführungsvarianten eine andere Anzahl an Lamellen 29, respektive an Hohlräumen 28 aufweisen.

Um die drei Spulen 6 pro Phase in das Werkzeug 20 einzuziehen, erfolgt eine besondere Zuordnung der Längshohlräume 28 zu den drei Spulen 6. Diese Zuordnung veranschaulicht Fig. 1c. Insoweit verwendet das Verfahren ein besonderes Wickelkonzept.

Wie Fig. 1c veranschaulicht, sind den Spulen jeder Phase U, V, W auf zwei einander gegenüberliegende Winkelabschnitte α1, α2, β1, β2 und γ1, γ2 des Statorinnenumfangs aufgeteilt, wobei jeder Winkelabschnitt drei nebeneinander liegende Nuten 4 umfasst, um die drei Spulen einer Phase U, V, W aufzunehmen. Betrachtet wird nachfolgend die erste Phase U, umfassend eine erste Spule 6.1, eine zweite Spule 6.2 und eine dritte Spule 6.3, deren erste Spulenlängsabschnitte 6a in den drei benachbarten Nuten 4.1, 4.2 und 4.3 des ersten Winkelabschnitts α1 und deren zweite Spulenlängsabschnitte 6b in den drei benachbarten Nuten 4.10, 4.11 und 4.12 des zweiten Winkelabschnitts α1 liegen.

Um symmetrische Wickelköpfe 7, 8 zu erreichen, ist vorgesehen, dass eine Spule 6 jeweils in denjenigen beiden Nuten 4 gegenüberliegender Winkelabschnitte liegt, die zueinander in Umfangsrichtung betrachtet am nächsten sind, d.h. stirnseitig des Statorpakets 1 in Umfangsrichtung den kürzesten Abstand zu einander haben.

Um dies zu realisieren, ist vorgesehen, dass die dritte Spule 6.3, die in der ganz rechts liegenden Nut 4.3 des ersten Winkelbereichs a1 einliegt, um vom zweiten Wickelkopf 8 zum ersten Wickelkopf 7 zu gelangen, auch die ganz rechts liegende Nut 4.10 des zweiten Winkelbereichs α2 verwendet, um vom ersten Wickelkopf 7 zurück zum zweiten Wickelkopf 8 zu gelangen. In entsprechender Weise verwendet die erste Spule 6.1, die in der ganz links liegenden Nut 4.1 des ersten Winkelbereichs a1 einliegt, um vom zweiten Wickelkopf 8 zum ersten Wickelkopf 7 zu gelangen, auch die ganz links liegende Nut 4.12 des zweiten Winkelbereichs α2, um vom zweiten Wickelkopf 7 zurück zum ersten Wickelkopf 8 zu gelangen. Die erste und dritte Spule 6.1, 6.3 verwenden somit keine gegenüberliegenden Nuten 4. Dies ist allerdings bei der zweiten Spule 6.2 notwendig, weil sie mittig zwischen der ersten und der dritten Spule 6.1, 6.3 liegt. Für den Erhalt eines symmetrischen Wickelkopfes 7, 8 erfolgt eine hälftige Aufteilung des Drahtbündels der zweiten Spule 6.2 auf je zwei Teilbündel 6.2a, 6.2b, die in einander entgegengesetzte Umfangsrichtungen geführt werden.

Bezogen auf das Einziehwerkzeug 20, dessen Längshohlräume 28 den Nuten 4 des Statorpakets 1 entsprechen, bedeutet dies Folgendes: eine erste Spule 6 einer Phase, die in einen ersten Längshohlraum 28 eingelegt wird, nicht zu dem diametral gegenüberliegenden Längshohlraum 28 geführt wird, sondern zu demjenigen, der entgegen dem Uhrzeigersinn zwei Längshohlräume 28 näher liegt. Anschließend wird der zum ersten Längshohlraum 28 im Uhrzeigersinn benachbarte zweite Längshohlraum 28 freigelassen und die dritte Spule der Phase in den hierzu benachbarten dritten Längshohlraum 28 eingezogen, die ebenfalls nicht zu dem diametral gegenüberliegenden Längshohlraum 28 geführt wird, sondern zu demjenigen, der im Uhrzeigersinn zwei Längshohlräume 28 hierzu näher liegt. Anschließend wird die mittlere, zweite Spule 6 mit ihren ersten beiden und zweiten beiden Teilbündeln 6.2a, 6.2b eingezogen. Die Teilbündel 6.2a, 6.2b werden seitens des ersten Wickelkopfes 7 in einander entgegengesetzte Umfangsrichtungen um den Konus 24 bzw. den vorderen Wickelträgerabschnitt 22 gelegt. Ferner werden die Teilbündel 6.2a, 6.2b seitens des zweiten Wickelkopfes 7 in einander entgegengesetzte Umfangsrichtungen um die Lamellen 29 gelegt.

Entgegen der beschriebenen Vorgehensweise kann auch zuerst die zweite Spule einer Phase in das Werkzeug 20 eingezogen werden und anschließend die erste und dritte Spule eingezogen werden.

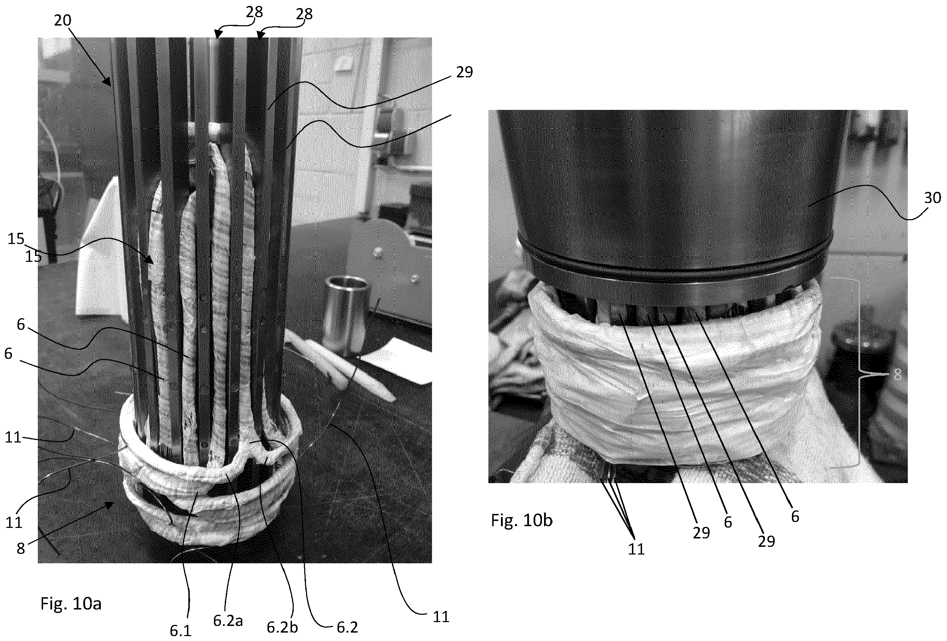

Figur 10a zeigt das Einziehwerkzeug 20 mit in die Längshohlräume 28 eingezogenen Spulen 6 aus mit Isolationsmaterial 15 umwickelten Drahtbündeln. Deutlich erkennbar ist der radial vor den Lamellen 29 liegenden erste Wickelkopf 8 und die darin realisierte Aufteilung der mittleren, zweiten Spule 6.2 auf zwei Teilbündel 6.2a, 6.2b, in die sich die Spule 6.2 im ersten Wickelkopf 8 verzweigt, um die Lamellen 29 jeweils rechts- und linksherum zu umschließen. Die zwei Teilbündel 6.2a, 6.2b liegen axial über den Wickelkopfabschnitten der ersten und dritten Spule 6.1 und 6.3, was verdeutlich, dass die zweite Spule 6.2 nach dem Einziehen der ersten und dritten Spule 6.1, 6.3 in das Werkzeug 20 eingezogen wurde.

Es versteht sich von selbst, dass anstelle der Aufteilung der zweiten Spule 6.2 einer Phase seitens der Wickelköpfe 7, 8 als zweite Spule sogleich zwei Teilspulen mit N/2 Windungen heergestellt und in das Werkzeug 20 eingezogen werden können. Diese Teilspulen werden dann mit ihren entsprechenden Längsspulenabschnitten 6a, 6b gemeinsam in dieselben Längshohlräume 28 eingebracht. Die nebeneinanderliegenden Längsspulenabschnitte 6a, 6b können einzeln mit dem Isoliermaterial 15 umwickelt sein, so dass in den Längshohlräumen 28 der zweiten Spule 6.2 zwei Drahtbündel einliegen, oder gemeinsam, so dass in den Längshohlräumen 28 der zweiten Spule 6.2 nur ein Drahtbündel einliegt.

Wie ebenfalls bereits ausgeführt, können anstelle der Ummantelung der Drahtbündel mit dem Isoliermaterial 15 außerhalb des Werkzeugs 20 die Längshohlräume mit einem Isolationsmaterial, beispielsweise einem gefalteten Isolationspapier ausgekleidet sein.

Zum Vergießen der Spulen 6, werden die drei Stempel 25, 26, 27 aus dem Werkzeug 20 entfernt und die erste und zweite Hülse 30, 31 aufgeschoben. Anschließend wird die Vergussmasse in das Werkzeug 20 gegossen, so dass alle Spulen 6 gemeinsam zu einem monolithischen Vergusskörper vergossen werden.

Nach dem Aushärten der Vergussmasse wird der Vergusskörper entformt. Hierzu werden zunächst die Hülsen 30, 31 abgezogen, die erste Hülse 30 in Richtung des vorderen Axialendes 35 und die zweite Hülse 31 in Richtung des hinteren Axialendes 36 relativ zum Vergusskörper bewegt wird. Anschließend werden die Lamellen 29 vom Wickelträger 21 gelöst, insbesondere abgeschraubt, und entfernt, indem sie zum vorderen Axialende 35 hin herausgezogen werden. Schließlich wird der Wickelträger 21 axial in Richtung des hinteren Axialendes 36 hin aus dem Vergusskörper herausgezogen.

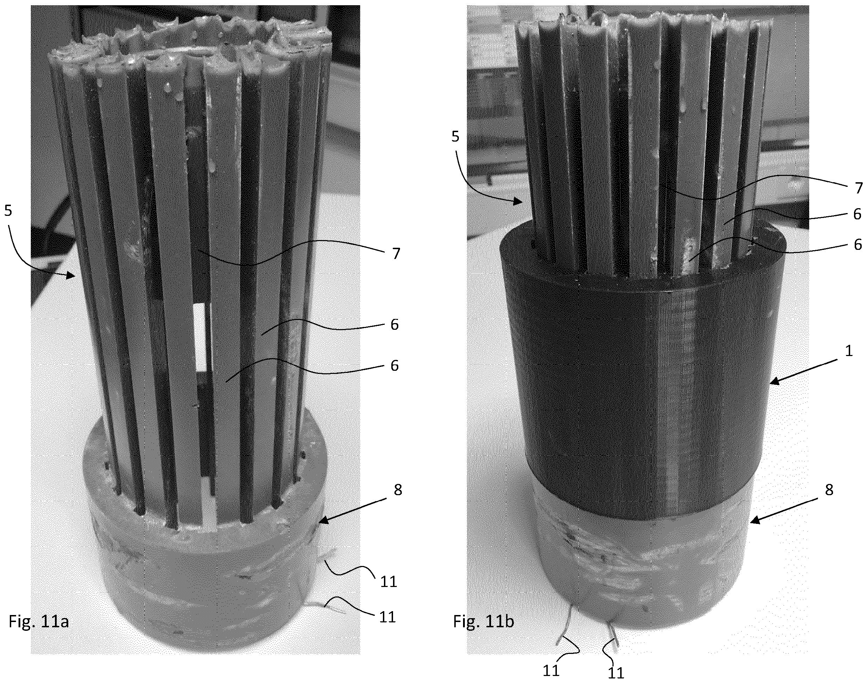

Der entformte Vergusskörper ist in Fig. 11a bis 11d in verschiedenen Ansichten dargestellt, wobei in Fig 11b zur Veranschaulichung ein Statorkörper 1 axial auf den Vergusskörper aufgeschoben ist. Der Vergusskörper bildet das Spulenpaket 5. Er besteht im Wesentlichen aus drei Abschnitten, einem ersten Ringzylinder, in dem der erste Wickelkopf 8 vergossen ist, einer Anzahl sich parallel erstreckender Stangen, in denen die Längsspulenabschnitte der Spulen 6 vergossen sind und einen zweiten Ringzylinder, in dem der zweite Wickelkopf 7 vergossen ist.

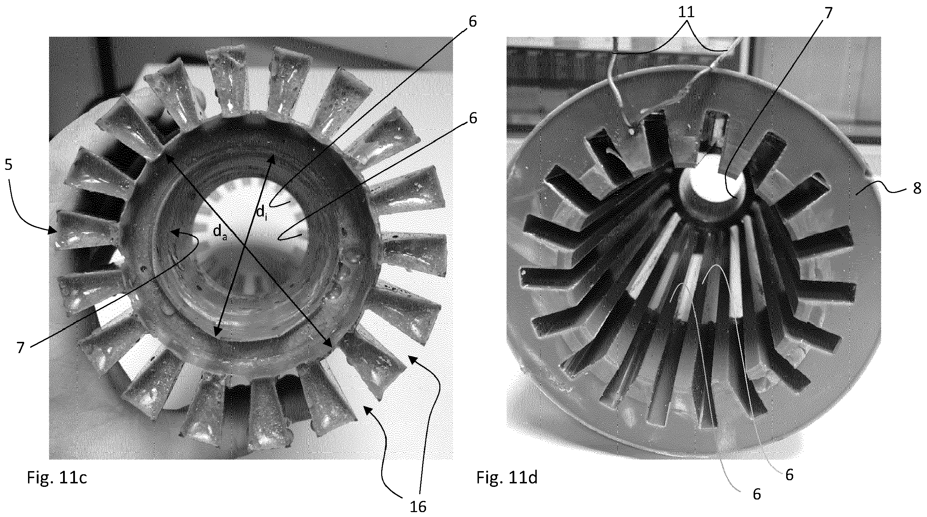

Die Stangen springen einerends zahnartig von der Innenseite des ersten Ringzylinders radial nach innen vor, siehe Fig. 11d, und erstrecken sich axial von diesem weg. Sie gehen anderenends in den zweiten Ringzylinder über, von dessen Außenseite sie radial abstehen, siehe Fig. 11c. Mit anderen Worten liegt der zweite Ringzylinder innerhalb des von den Stangen eingerahmten Raumbereichs. Die Freiräume zwischen den Stangen dienen der Aufnahme der Statorzähne, wie Fig. 11b anhand des aufgeschobenen Statorpakets 1 verdeutlicht.

### Einzieh-/ Falttechnik

Ein drittes Verfahren zur Herstellung des Spulenpakets 5 sieht vor, die Spulen 6 von dem ersten Wickelkopf 7 ausgehend hin zum zweiten Wickelkopf 8 zu falten und dabei in einen entsprechenden Wickelträger 51 einzuziehen. Diese Verfahrensweise wird hier als Einzieh-/ Falttechnik bezeichnet. Das hierzu verwendete Werkzeug 50, 51 ist in den Fig. 12a-f und 13a-g dargestellt. Fig. 12a-12f veranschaulichen den Zustand des Werkzeugs 50 samt Wickelträger 51 zu unterschiedlichen Zeitpunkten.

Fig. 12a zeigt den Wickelträger 51 mit drei Spulen 6 einer ersten Phase U, nämlich eine erste Spule 6.1, eine zweite Spule 6.2 und eine dritte Spule 6.3, deren den ersten Wickelkopf 7 bildende Wickelkopfabschnitte 6c bereits in den Wickelträger 51 eingezogen sind. Die Spulen 6 sind hier lediglich zur Veranschaulichung mit einem rechteckigen Querschnitt und massiv dargestellt, jedoch handelt es sich dabei wie bei den vorherigen Ausführungsvarianten um biegbare Drahtbündel aus einem in einer Anzahl N an Windungen gelegten Wickeldraht, genauer gesagt einem Runddraht.

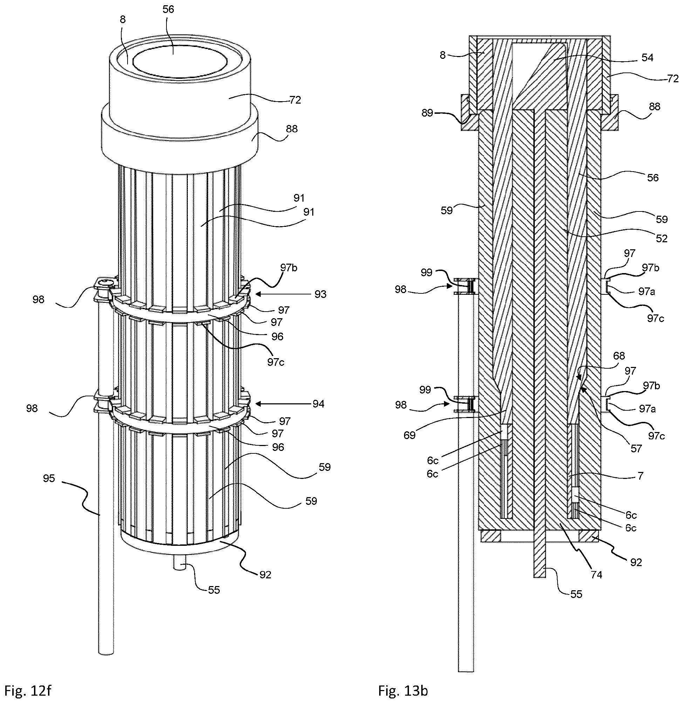

Der Wickelträger 51 weist einen zentralen Führungszylinder 52 auf, der an einem ersten axialen Ende 65, das ein Einführende des Wickelträgers 51 zur Aufnahme der Spulen 6 bildet, frei ist. An dem gegenüberliegenden zweiten axialen Ende 66 ist eine ringförmige Basisplatte 74 an den Führungszylinder 52 einstückig angeformt, vgl. Fig. 13b. Die Basisplatte 74 könnte jedoch auch ein separates Bauteil bilden. Von der Basisplatte 74 erheben sich ferner in axialer Richtung eine Anzahl paralleler Lamellen 59, die entlang der Peripherie der Basisplatte 74 äquidistant angeordnet sind und von der Basisplatte 74 radial teilweise vorstehen. Hierdurch wird eine Führung der Verschlussstangen 91 geschaffen, die nachfolgend erläutert sind. Zwischen zwei in Umfangsrichtung benachbarten Lamellen 59 ist jeweils ein Längshohlraum 58 vorhanden, in den ein Längsabschnitt 6a, 6b einer Spule eingezogen wird. Ferner besteht zwischen dem zentralen Führungszylinder 52 und den Lamellen 59 ein Ringraum 71, um jeden der ersten Wickelkopfabschnitte 6c der Spulen 6 von einem Längshohlraum 58 entlang eines Kreisbogens um den Führungszylinder 52 zum anderen Längshohlraum 58 zu führen und ferner zu ermöglichen, diese ersten Wickelkopfabschnitte 6c innerhalb des Wickelträgers 51 in axialer Richtung zum zweiten axialen Ende 66 bzw. in Richtung Basisplatte 74 zu schieben.

Der Führungszylinder 52 besitzt am ersten Ende 65 einen Kopf in Form eines unsymmetrischen Konus 54, der als Abweiserexzenter dient und nachfolgend als Exzenterkonus bezeichnet wird. Der Exzenterkonus 54 hat eine Mantelfläche, die auf einer Seite steiler als auf der gegenüberliegenden Seite ist. Der Exzenterkonus 54 ist mit einem Stift 55 verbunden, der sich drehbar durch den Führungszylinder 52 hindurcherstreckt und unterseitig der Basis 74 vorsteht. Der Exzenterkonus 54 kann über den zentralen Stift 55 gedreht werden, um die weniger steile Seite der Mantelfläche so zu positionieren, dass sie zu dem zu bildenden bogenförmigen Abschnitt 6cb der einzuziehenden Spule 6 gerichtet ist. Die Spule 6 gleitet dann die weniger steile Seite des Exzenterkonus 54 entlang nach unten in den Ringraum 71 hinein.

Der Ringraum 71 ist am ersten axialen Ende 65 in axialer Richtung offen, um die Spulen 6.1, 6.2, 6.3 einzusetzen. Um das Einsetzen zu erleichtern, sind die Stirnseiten 67 der Lamellen 59 abgerundet. Die Lamellen 59 enden auf gleicher Höhe, wie der Führungszylinder 52, so dass der Exzenterkonus 54 axial gegenüber den Stirnseiten 67 der Lamellen 59 vorsteht.

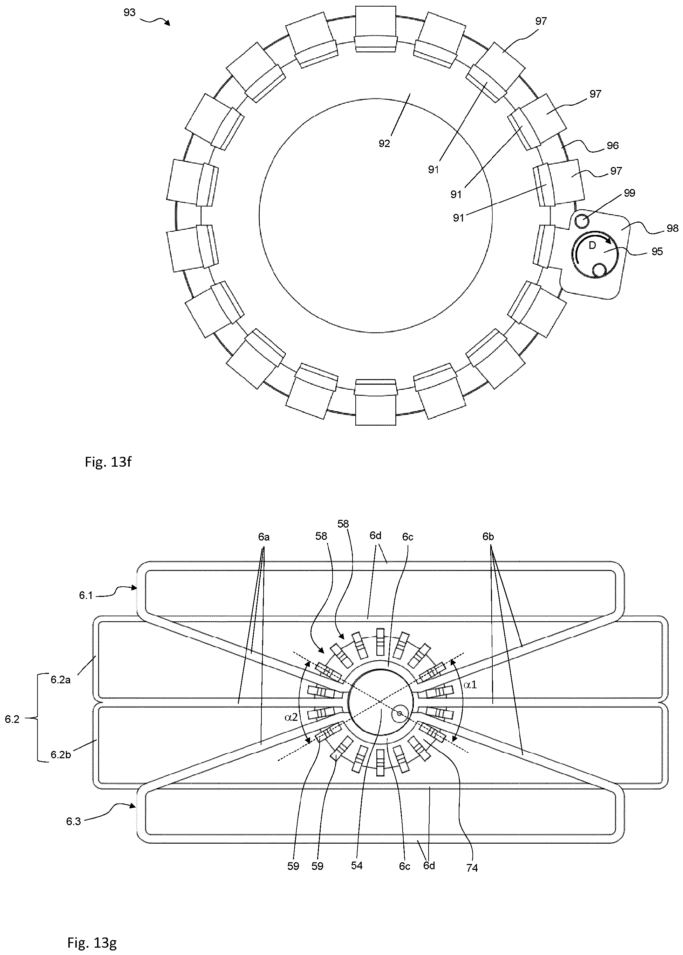

Wie Fig. 12a zu erkennen gibt, liegen die erste und dritte Spule 6.1, 6.3 in derselben Radialebene und axial über der zweiten Spule 6.2, d.h. auf Seiten des ersten axialen Endes 65 (Einführende) der zweiten Spule 6.2. Sie sind folglich nach der zweiten Spule 6.2 in den Wickelträger 51 eingesetzt worden. Fig. 13g zeigt den Wickelträger 51 und die Spulen 6.1, 6.2, 6.3 samt ihrer Anordnung in einer Draufsicht. Die zweite Spule 6.2 besteht, wie bereits bei der zweiten Ausführungsvariante erläutert, aus zwei Teilspulen 6.2a, 6.2b, um symmetrische Wickelköpfe 7, 8 zu erreichen. Die beiden Teilspulen 6,2a, 6.2b bilden gemeinsame Längsspulenabschnitte 6a, 6b und werden somit in dieselben Längshohlräume 58 eingezogen.

Die Zuordnung der Längshohlräume 58 zu den einzelnen Spulen 6.1, 6.2, 6.3 ist wie in Bezug zur Figur 1c erläutert. Somit liegen sich nur die beiden, der zweiten Spule 6.2 zugeordneten Längshohlräume 58 diametral gegenüber, wohingegen die beiden der zweiten und dritten Spule 6.1, 6.3 jeweils zugeordneten Längshohlräume 58, bezogen auf die zweite Spule 6.2, auf derselben Seite im rechten bzw. linken Halbraum liegen, oder anders ausgedrückt, innerhalb desselben Umfangshalbkreises liegen, vgl. Fig. 13g.

Die Lamellen 59 besitzen einen rechteckigen Querschnitt. Ihre radiale Breite ist am zweiten axialen Ende 66 größer als am ersten axialen Ende 65, wobei ein dem Führungszylinder 52 gegenüberliegender linearer Übergang 68 zwischen einem ersten Lamellenabschnitt mit der geringeren radialen Breite und dem zweiten Lamellenabschnitt mit der größeren radialen Breite besteht. Die linearen Übergänge 68 der Lamellen 59 bilden jeweils einen Teil einer Innenkonusfläche, die als Anlage für einen Pressstempel 56 dient, der einen korrespondierenden Außenkonus 57 aufweist. Infolge der unterschiedlichen radialen Breiten der Lamellenabschnitte, ist der Ringraum 71 im Bereich der ersten Lamellenabschnitte radial breiter, als im Bereich der zweiten Lamellenabschnitte.

In Fig. 12b ist der besagte Pressstempel 56 in axialer Richtung des Pfeils B in den Wickelträger 51 unter Ausfüllung des Ringraums 71 hineingefahren und hat die Spulen 6.1, 6.2, 6.3 zum zweiten Axialende 66 bzw. in Richtung Basisplatte 74 verschoben. Der Pressstempel 56 ist als Hohlzylinder ausgeführt, wobei sich der zentrale Führungszylinder 52 in seinen Innenhohlraum 73 hinein erstreckt, vgl. Fig. 13a. Die Mantelfläche des Presszylinders 56 ist durch Abflachungen (Facetten) gebildet, um bündig an den radial innenliegenden Stirnseiten der Lamellen 59 anzuliegen. Bei einer Anzahl von n Lamellen 59, bildet der Pressstempel 56 mit seiner Außenseite im Querschnitt folglich ein n-Eck.

Der zum zweiten axialen Ende 66 des Wickelträgers 51 gerichtete Stempelkopf 69 besitzt einen geringeren Außendurchmesser als der übrige Teil des Pressstempel 56, wobei zwischen dem Stempelkopf 69 und dem besagten übrigen Teil ein konischer Abschnitt vorhanden ist, der den zuvor genannten Außenkonus 57 bildet. Fig. 12b lässt erkennen, dass der Pressstempel 56 mit seinem Außenkonus 57 an den linearen Übergängen 68 der Lamellen 59 anliegt, so dass diese linearen Übergängen 68 Anschläge für den Presstempel 56 bilden und somit die maximale Einfahrtiefe für den Pressstempel 56 definieren, die in Fig. 12b erreicht ist. Die Spulen 6.1 6.2 6.3 liegen hier mit ihren ersten Wickelkopfabschnitten 6c axial vor dem Stempelkopf 69.

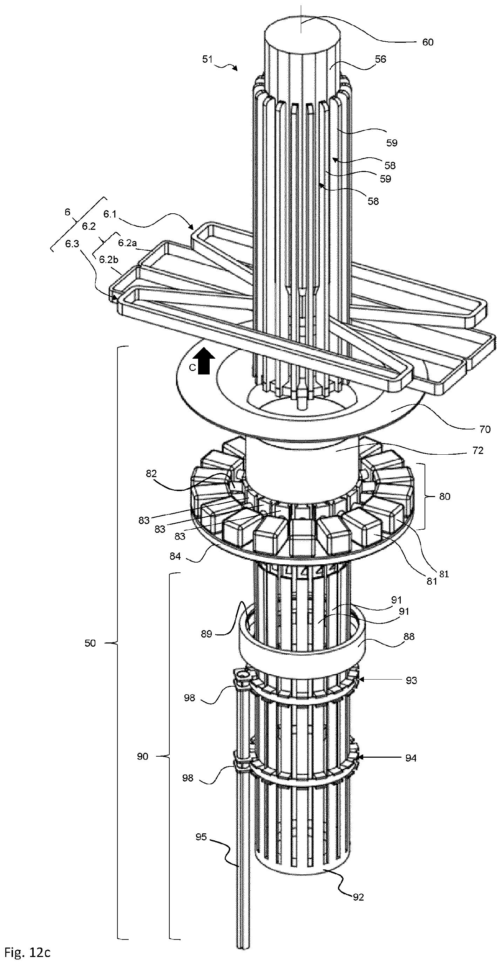

Fig. 12c zeigt nun das Werkzeug 50, 51 mitsamt dem Wickelträger 51 und der Vorrichtung 50 zum Einziehen und Falten der Spulen 6, die zudem auch zu deren Vergießen dient. Die Vorrichtung 50 ist in axialer Richtung relativ zum Wickelträger 51 verfahrbar.

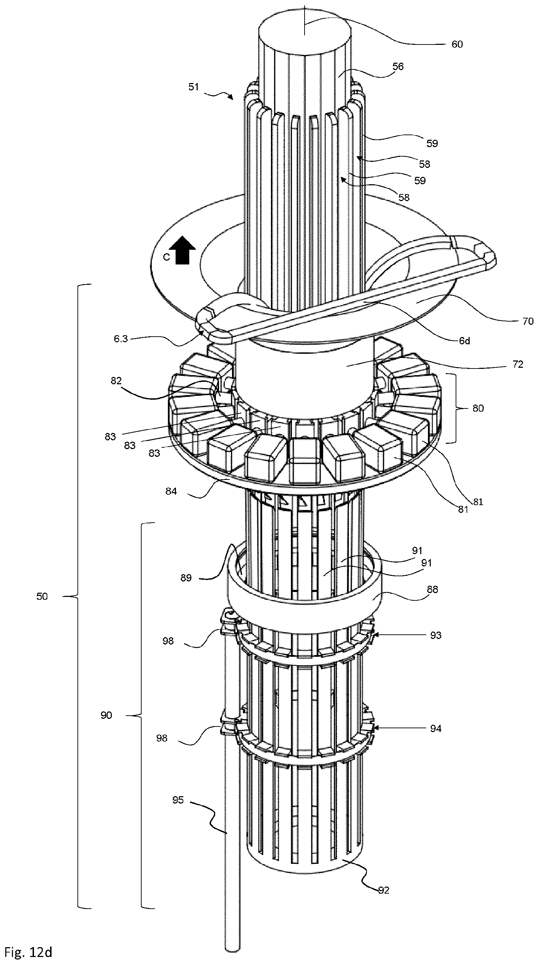

Die Vorrichtung 50 umfasst ein Einziehmittel 70, 80, das eingerichtet ist, die Spulen 6 hochzuklappen und in die Längshohlräume 58 zu drücken. Das Einziehmittel weist einen hyperbolischen Einziehtrichter 70 auf, der vom zweiten Axialende 66 ausgehend axial in Richtung des Pfeils C über den Wickelträger 51 geschoben wird. Der Einziehtrichter 70 weist einen radialen Kragen 75 in Gestalt einer Ringscheibe auf, auf dem die einzelnen Spulen 6 vor dem Falten aufliegen. Ein hyperbolischer Abschnitt 76 des Einziehtrichters 70, siehe Fig. 13a, verbindet den Kragen 75 mit einem zylindrischen Abschnitt 77, der die Lamellen 59 radial außen umgreift und an diesen entlangfährt. Während der axialen Bewegung des Einziehtrichters 70 zum ersten Axialende 65 relativ zum Wickelträger 51 faltet der hyperbolische Abschnitt 76 die Spulen 6 zunehmend hoch, so dass sie sich in axialer Richtung parallel zum Wickelträger 51 ausrichten, wodurch die Spulenlängsabschnitt 6a, 6b automatisch in die entsprechenden Längshohlräume 58 hineingedrückt werden, aus denen sie ursprünglich ausgehend vom ersten Wickelkopfes 7 radial heraustraten. Die Faltbewegung ist in Fig. 12d veranschaulicht, zu der Fig. 13a eine Querschnittsdarstellung entlang eines Axialschnitts durch die Werkzeugachse 60 zeigt. Der Schnitt verläuft durch die erste Spule 6.1, wobei die dritte Spule 6.3 nicht dargestellt ist. In diesen Figuren ist das Einziehmittel 70, respektive der Einführtrichter 70, bereits teilweise auf den Wickelträger 51 aufgeschoben.

Es sei darauf hingewiesen, dass die Darstellung in Fig. 13a die geschnittene erste Spule 6.1 nahe der Basisplatte 74 zeigt, d.h. viel tiefer, als der Pressstempel 52 den ersten Wickelkopfabschnitt 6c der ersten Spule 6.1 zu schieben vermag. Dies ist darauf zurückzuführen, dass die Spulen 6 der anderen Phasen ebenfalls bereits in den Wicklungsträger 51 eingesetzt, in Fig. 13a jedoch nicht gezeigt sind. Die ersten Wickelkopfabschnitte 6c dieser anderen Spulen 6 befinden sich zwischen dem Wickelkopfabschnitt 6c der ersten Spule 6.1 und dem Pressstempel 52, der folglich alle ersten Wickelkopfabschnitte gemeinsam in Richtung Basisplatte vor sich her geschoben hat. Zwischen der ersten Spule 6.1 und der Basisplatte 74, d.h. unter der ersten Spule 6.1 liegt bestimmungsgemäß noch der erste Wickelkopfabschnitt 6c der zweiten Spule 6.2m, vgl. Fig. 12a, 12b.

Auf der dem Wickelträger 51 axial gegenüberliegenden Seite des Einführtrichters 70 ist eine Hülse 72 angeordnet, die mitsamt dem Einführtrichter 70 außen über den Wickelträger 51 zum ersten Axialende 65 in eine Endposition verfahren wird, um dort für das Vergießen des zweiten Wickelkopfs 8 eine radial äußere Begrenzung zu bilden, siehe Fig. 12f und 13b. Ein Ring 88 ist zur Abdichtung an die Hülse 72 angesetzt und umgreift diese von der Unterseite außenumfänglich. Er besitzt hierzu eine innere Ausdrehung, so dass der Innenradius des Rings 88 seitens der Hülse 72 größer ist, als auf der von ihr abgewandten Seite. Die Ausdrehung bildet eine Stufe 89, mit der der Ring 88 an der Stirnseite der Hülse 72 anliegt.

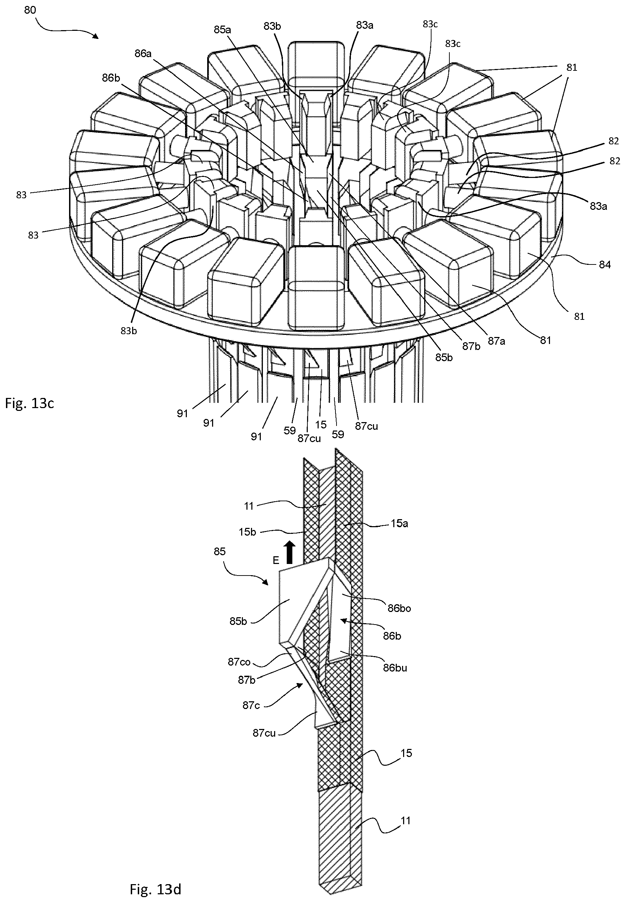

Das Einziehmittel 70, 80 umfasst ferner eine Pressring-Aktorik 80, die in Einzeldarstellung in Fig. 13d gezeigt ist. Sie weist eine der Anzahl der Längshohlräume 58 entsprechende Anzahl ringförmig angeordneter Gleitstempel 84 auf, die der Hülse 72 folgend auf den Wickelträger 51 geschoben werden, so dass jeder Gleitstempel 83 in einen der Längshohlräume 58 hineinragt, um den entsprechenden Spulenlängsabschnitt 6a, 6b der jeweiligen Spule 6 radial tiefer in den entsprechenden Längshohlraum 58 zu pressen. Die Gesamtheit aller Gleitstempel 84 bildet somit einen Pressring. Fig. 13a veranschaulicht, dass die radiale Stirnseite eines Gleitstempels 83 an dem Längsspulenabschnitt 6a der Spule 6.3 anliegt und diesen radial nach innen drückt. Die Gleitstempel 83 fahren in dieser radialen Position zwischen den Lamellen 59 den Wickelträger 51 entlang zum zweiten Wickelkopf 8 am ersten Axialende 65.

Um die vorgenannte Aufgabe zu erfüllen, sind die Gleitstempel 83 im radialen Querschnitt vorderseitig annährend trapezförmig, um im Wesentlichen formschlüssig in einen Längshohlraum 58 hineinzuragen. Die radial außen liegende Rückseite der Gleitstempel 83 ist zu den beiden Umfangsseiten durch jeweils einen Vorsprung 83a, 83b erweitert, so dass ein Gleitstempel 83 in etwa eine T-Form aufweist. Des Weiteren lässt Fig. 13c erkennen, dass die zum Einziehtrichter 70 gerichtete Oberkante 83c der Gleitstempel 83 abgerundet ist. Dies vereinfacht es, an den Längsspulenabschnitten 6a, 6b entlang zu gleiten bzw. über radial aus dem Längshohlraum 58 vorstehende Spulenabschnitte hinweg zu fahren und diese radial zurück in den Längshohlraum 58 zu drücken.

Jeder Gleistempel 83 ist über einen Schaft 82 in einem jeweiligen Dämpfungsblock 81 gehalten. Die Dämpfungsblöcke 81 sind ringförmig auf einem Montagering 84 befestigt, so dass sich die Gleitstempel 83 radial zur Werkzeugachse 60 erstrecken. Die Gleitstempel 83 sind radial relativ zu den Dämpfungsblöcken 81 beweglich und können entgegen einer Rückstellkraft in die Dämpfungsblöcke 81 hineingedrückt werden. Hierzu können die Dämpfungsblöcke 81 aus einem elastischen Material bestehen oder mit einem solchen Gefüllt sein oder einen mechanischen Kraftspeicher wie z.B. eine Feder enthalten, wobei das Material oder die Feder in seinem/ ihrem entspannten Zustand den Schaft 82 samt Gleitstempel 83 von sich wegdrückt und durch eine radiale Bewegung des Gleitstempels 83 nach außen komprimiert wird.

Die Pressring-Aktorik 80 wird, wie bereits erläutert, in Richtung des ersten Axialendes 65 zum zweiten Wickelkopf 8 gefahren. Hier treten die Längsspulenabschnitte 6a, 6b notwendigerweise radial aus den Längshohlräumen 58 heraus, um dann rechts- oder linksherum bogenförmig um die Lamellen 59 geführt zu werden. Durch das radiale Heraustreten der Längsspulenabschnitte 6a, 6b aus den Längshohlräumen 58 zum zweiten Wickelkopf 8 hin werden die Gleitstemple 83 bei fortschreitender Axialbewegung zum ersten Axialende 65 hin radial nach außen in die Dämpfungsblöcke 83 gedrückt. Dies erleichtert es wiederum, dass die Pressring-Aktorik 80 über die Hülse 72 hinweg fahren kann.

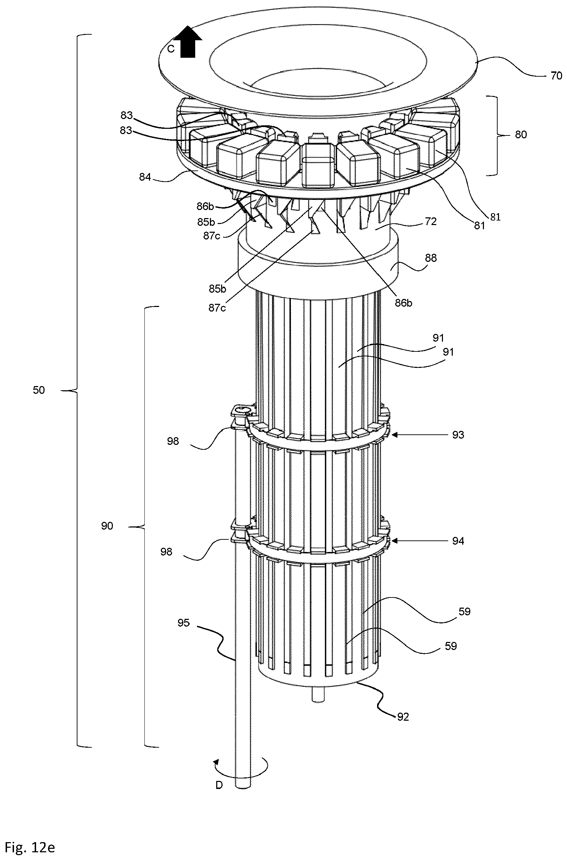

Denn wie Fig. 12e zeigt, wird die Pressring-Aktorik 80 in der Endposition der Hülse 72 relativ zum Wickelträger 51 weiter nach oben bewegt und zwar außen über die Hülse 72. Hierzu werden die Gleitstempel 83 auch um die radiale Dicke der Hülse 72 in die Dämpfungsblöcke 81 gedrückt, so dass die Pressring-Aktorik 80 über die Hülse 72 hinweg bewegt werden kann. Das Einziehmittel 70, 80, d.h. der Einziehtrichter 70 und die Pressring-Aktorik 80 können anschließend nach oben abgenommen werden.

Fig. 13d veranschaulicht in einer Einzeldarstellung ein Leit- und Faltelement 85, das die Pressring-Aktorik 80 unterhalb jedem Gleitstempel 83 besitzt. Gezeigt ist außerdem die Wirkungsweise des Leit- und Faltelements 85, das dafür vorgesehen ist, eine Isolierung 15 in Gestalt eines Isolierpapiers während der Bewegung der Pressring-Aktorik 80 auf den elektrischen Leiter 11 zu Falten, so dass dieser vollständig von der Isolierung 15 umgeben wird. Der elektrischen Leiter 11 ist hier lediglich exemplarisch rechteckig dargestellt, obgleich es in der Praxis ein rundes oder ovales Adernbündel ist.

Die Längshohlräume 58 sind vor dem Einbringen der Spulen 6 mit der Isolierung 15 ausgekleidet. Die Isolierung 15 ist im Querschnitt U-förmig, wobei eine rechte Seitenflanke 15a und eine linke Seitenflanke 15b radial aus jedem der Längshohlräume 58 hervorsteht.

Eine Leit- und Faltelement 85 besteht aus einem Rückenteil 85b, hier in Form eines rechtwinkligen Dreiecks, mit einem ersten, in Bewegungsrichtung E vorderen Ende, an dem rechtsseitig ein erster Faltflügel 86b angeformt ist, und einem in Bewegungsrichtung E hinteren Ende, an dem linksseitig ein zweiter Faltflügel 87c angeformt ist. Der erste und der zweite Faltflügel 86b, 87c sind somit einerseits axial zueinander beabstandet, wobei der erste Faltflügel 86b voreilt, und sind andererseits bezogen auf einen Längshohlraum 58 gegenüberliegend angeordnet. Dabei ist der erste Faltflügel 86b dazu bestimmt, die rechte Seitenflanke 15a der Isolation 15 auf den elektrischen Leiter 11 zu falten und die der zweite Faltflügel 87c dazu bestimmt, die linke Seitenflanke 15b der Isolation 15 auf den elektrischen Leiter 11 zu falten. Die Faltflügel 86b, 87c stehen im Wesentlichen rechtwinklig vom Rückenteil 85b in Richtung Längshohlraums 58 ab.

Jeder der Faltflügel 86b, 87c ist durch eine rechteckige Grundform definiert, deren Längserstreckung größer ist, als die Quererstreckung. Dabei erstrecken sich beide Faltflügel 86b, 87c mit ihrer Längsachse entgegen der Bewegungsrichtung E oder einfach gesagt, nach hinten.

Der erste Faltflügel 86b ist entlang seiner Längsachse um 90° verdreht, so dass seine Quererstreckung von einer radialen Ausrichtung zum Längshohlraum 58 am proximalen Ende 86bo kontinuierlich in eine parallele Ausrichtung zum Längshohlraum 58 am distalen Ende 86bu übergeht, und das distale Ende 86bu gleichzeitig nahe am Hohlraum liegt, um zungenartig am elektrischen Leiter 11 anliegen zu können. Wie Fig. 13d veranschaulicht, wird die rechte Seitenflanke 15a der Isolation 15 an der zur linken Seitenflanke 15b gerichteten Innenseite des ersten Faltflügels 86b entlanggeführt und bei der Bewegung des Leit- und Faltelements 85 in Richtung E infolge der Verdrehung seiner Längsachse zunehmend umgelegt bzw. auf den elektrischen Leiter 11 gefaltet.

Der zweite Faltflügel 87c ist entlang seiner Diagonalen um 90° gefaltet, und zwar derart, dass ein erster Abschnitt 87co rechtsseits der diagonalen Faltlinie radial zum Längshohlraum 58 steht und ein zweiter Abschnitt 87cu linksseits der Faltlinie parallel zum Längshohlraum 58 und nahe zu diesem liegt, um zungenartig am elektrischen Leiter 11 anliegen zu können. Wie Fig. 13d veranschaulicht, wird die linke Seitenflanke 15b der Isolation 15 an der zur rechten Seitenflanke 15a gerichteten Innenseite des zweiten Faltflügels 87c entlanggeführt und bei der Bewegung des Leit- und Faltelements 85 in Richtung E infolge der Diagonalfaltung umgelegt bzw. auf den elektrischen Leiter 11 gefaltet.

Da der erste Faltflügel 86b voreilt, erfolgt die Faltung der rechten Seitenflanke 15a der Isolation 15 zuerst, so dass der zweite Faltflügel 87c die linke Seitenflanke 15b der Isolation 15 auf die bereits gefaltete erste Seitenflanke 15a faltet.

Der erste Faltflügel 86b ist nur an seiner Längsseite an seinem proximalen Ende 86bo am vorderen Ende des Leit- und Faltelements 85 mit diesem verbunden, also quasi punktförmig. Das Leit- und Faltelements 85 besitzt auf gleicher Höhe gegenüber dem ersten Faltflügel 86b eine Seitenwand 87b, die an das Rückenteil 85b angeformt ist. Die linke Seitenflanke 15b der Isolation 15 ist an dieser Seitenwand 87b ebenfalls entlanggeführt. Von der Seitenwand 87b steht der zweite Seitenflügel 87c ab, indem der erste Abschnitt 87co an die Seitenwand 87b angeformt ist.

Wie insbesondere Fig. 13a und 13c veranschaulichen, befindet sich unterhalb eines jeden Gleitstempels 83 ein Leit- und Faltelement 85 der vorbeschriebenen Art. Fig. 13a lässt erkennen, dass die Gleitstempel 83 an ihrer radial außen liegenden Rückseite eine axiale Verlängerung 85a, 85b aufweisen, die nach unten gerichtet bzw. der bestimmungsgemäßen Bewegungsrichtung E des Einziehmittels 70, 80 entgegengesetzt gerichtet sind. Die Verlängerung 85a, 85b ist mit dem jeweiligen Gleitstempel 83 einstückig. Die Verlängerung 85a, 85b bildet das Leit- und Faltelements 85 und besteht aus einem ersten Verlängerungsabschnitt 85a, 86a, 87a, der sich axial unmittelbar an einen Gleitstempel 83 anschließt, und einem sich daran unterhalb anschließenden zweiten Verlängerungsabschnitt 85b, 86b, 87b.

Fig. 13c zeigt, dass der erste Verlängerungsabschnitt aus einem Rückenteil 85a und zwei Leitwänden 86a, 87a besteht, die an den Seiten des Rückenteils 85a in Umfangsrichtung angeformt sind und in etwa radial zur Vorrichtungsachse 60 vorstehen. Diese sorgen dafür, dass die rechte und linke Seitenflanke 15a, 15b der Isolation 15 in der Flucht des Längshohlraums 58 verbleibt und nicht daraus vorsteht. Die Seitenflanken 15a, 15b der Isolation 15 werden zwischen den Leitwänden 86a, 87a gehalten.

Der zweite Verlängerungsabschnitt 85b, 86b, 87b ist durch den in Fig. 13d gezeigten Teil des Leit- und Faltelements 85 gebildet, und zwar durch das Rückenteil 85b, den ersten Faltflügel 86b und die Seitenwand 87b, sowie den zweiten Faltflügel 87c.

Wie Fig. 12c weiter zeigt, liegt axial unterhalb der Pressring-Aktorik 80 der Ring 88 mit der Ausdrehung, die eine Stufen 89 im Übergang von dem der Pressring-Aktorik 80 zugewandten Seite des Rings 88 mit einer geringeren radialer Dicke, zu dem der Pressring-Aktorik 80 abgewandten Seite des Rings 88 mit einer größeren radialer Dicke bildet.

Die Vorrichtung 50 umfasst des Weiteren eine Verspannungsmechanik 90, die sich im Ausgangszustand des Verfahrens ebenfalls unterhalb des Wickelträgers 51 befindet, um aus Richtung des zweiten Axialendes 66 axial in den Wickelträger 51 bis zu einer Endposition einzufahren, die in Fig. 12e gezeigt ist, um die Längshohlräume 58 radial zu verschließen und die Spulen 6 vergießen zu können.

Die Verspannungsmechanik 90 weist eine der Anzahl an Längshohlräumen 58 entsprechende Anzahl an Verschlussstangen 91 auf, die dazu bestimmt sind, formschlüssig in die Längshohlräume 58 eingeschoben zu werden. Hierzu sind die Verschlussstangen 91 ringförmig äquidistant angeordnet und an ihrem dem Wickelträger 51 gegenüberliegenden Ende durch einen gemeinsamen Tragring 92 miteinander einstückig verbunden. Etwa mittig bezogen auf ihre axiale Gesamtlänge sowie mittig in der unteren Hälfte besitzen die Verschlussstangen 91 jeweils einen Spannring 93, 94, der dazu dient, die Verschlussstangen 91, genauer gesagt alle Verschlussstangen gleichzeitig radial nach innen zu drücken. Fig. 13f zeigt den oberen Spannring 93 in einer Draufsicht auf die Verspannungsmechanik 90. Der weitere Spannring 94 ist identisch aufgebaut.

Jeder der Spannringe 93, 94 ist durch eine ringförmige Anordnung von Spurblöcken 97 gebildet, die an der radialen Außenseite der Verschlussstangen 91 auf gleicher axialer Höhe befestigt sind, so dass alle Spurblöcke 97 in einer gemeinsamen Radialebene liegen. Die Spurblöcke 97 weisen auf ihrer der entsprechenden Verschlussstange 91 abgewandten Rückseite eine Spur 97a auf, die von zwei einander axial gegenüberliegenden Seitenflanken 97b, 97c eingefasst ist, siehe Fig. 13b. In der Spur 97a liegt ein um die Verschlussstangen 91 gelegter, die Spurblöcke 97 verbindender Spannriemen 96, der von den Seitenflanken 97b, 97c in Position gehalten wir, so dass er nicht verrutschen kann.

An einer der Verschlussstangen 91 ist auf Höhe des ersten und zweiten Spannrings 93, 94 jeweils eine Halterung 98 für einen Drehstab 95 angeordnet, der diese Halterungen 98 durchdringt und drehbar darin gehalten ist. Wie Fig. 13b und 13f veranschaulichen, trägt jede der Halterungen 98 einen zylindrischen Stift 99, auf dessen Umfang der entsprechende Spannriemen 96 tangential geführt ist und an dem der Spannriemen 96 mit einem seiner Enden befestigt ist. Das andere Ende des Spannriemens 96 ist tangential an den Drehstab 95 geführt und an diesem befestigt. Durch eine Drehung des Drehstabs 95 in diejenige Umfangsrichtung, in die sich der Spannriemen 96 an den Drehstab 95 tangential anlegt, d.h. in Richtung des Pfeils E in Fig. 13f, wird der Spannriemen 96 zunehmend um den Drehstab 95 gewickelt, so dass sich seine Länge verkürzt und dadurch der Durchmesser des Spannriemens 93, 94 verringert. Dies wiederum bewirkt, dass die Verschlussstangen 91 radial nach innen zur Werkzeugachse 60 bewegt werden, um die Längshohlräume 58 zu verschließen.

In dem in den Wickelträger 51 axial eingefahrenen Zustand der Verspannungsmechanik 90, wie er in Fig. 12e zu sehen ist, erfolgt die genannte Drehung des Drehstabs 95 und damit die Verspannung der Spannringe 93, 94, so dass die Verschlussstangen 91 zwischen die Lamellen 59 gepresst werden und die Längshohlräume 58 des Wickelträgers 51 somit in radialer Richtung verschließen.

Gleichzeitig liegt die Hülse 72 am ersten Axialende 65 auf Höhe des zweiten Wickelkopfes 8 und begrenzt diesen radial nach außen. Das Einziehmittel 70, 80, genauer gesagt der Einziehtrichter 70 und die Pressring-Aktorik 80 können in dieser Endposition abgenommen werden oder axial auf einen nicht störenden Abstand zum Wickelträger 51 gefahren werden, so dass sich der in Fig. 12f gezeigte Zustand ergibt. Der Einfachheit halber, ist der zweite Wickelkopf 8 hier nur als ein massiver Ring dargestellt, obgleich es sich um einzelne, axial übereinanderliegende Drahtbündel handelt, die zueinander und zur Hülse 72 viele Freiräume haben. Diese werden durch das Vergießen der Spulen 6 ausgefüllt.

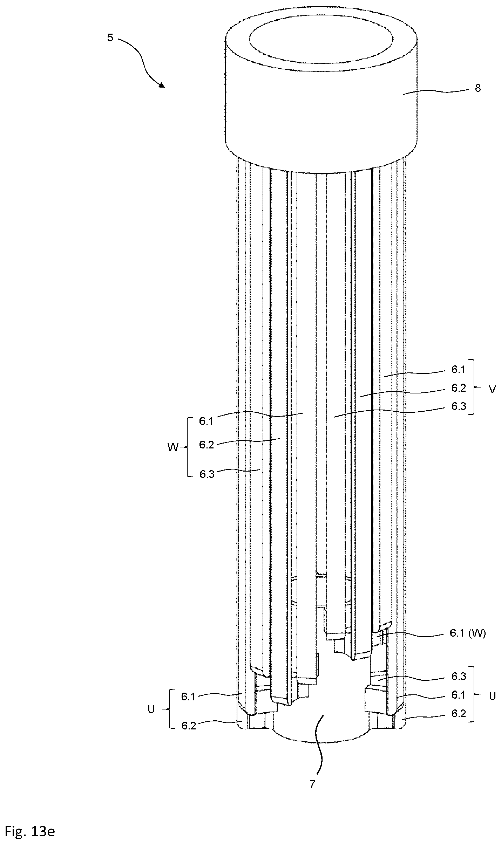

Die Vergussmasse wird seitens des ersten Axialendes 65, d.h. seitens des zweiten Wickelkopfs 8 drucklos eingefüllt. Sie fließt durch die Frei- und Hohlräume zwischen den Drahtbündeln der Spulen 6 im zweiten Wickelkopf 8 und den Längshohlräumen 58 zum ersten Wickelkopf 7, so dass ein vollständiger Verguss aller Spulen samt Wickelköpfen 7, 8 erfolgt. Der vergossene Spulenkörper 5 ist in Figur 13e dargestellt.

### Nadelwickeltechnik

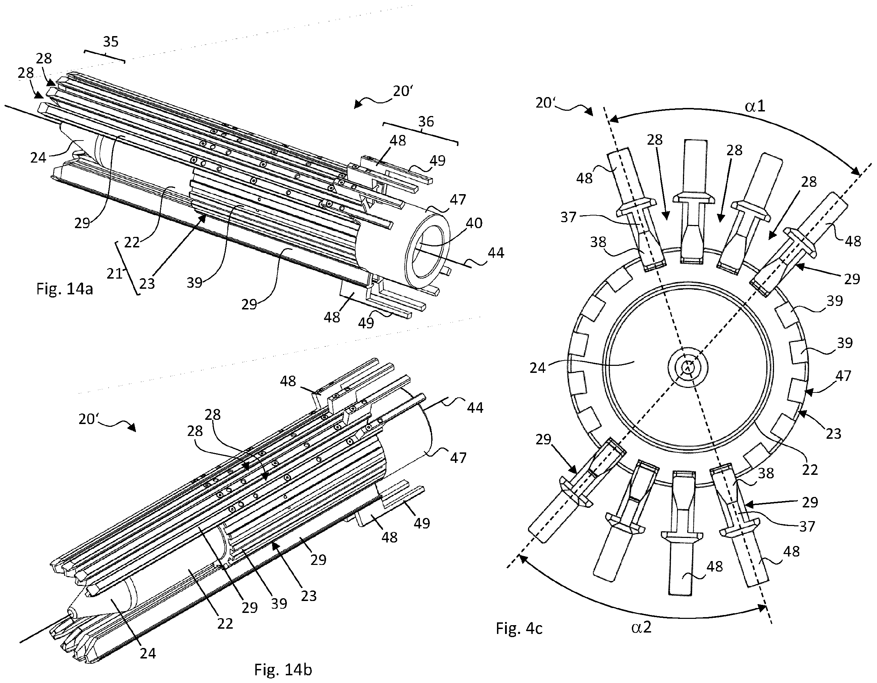

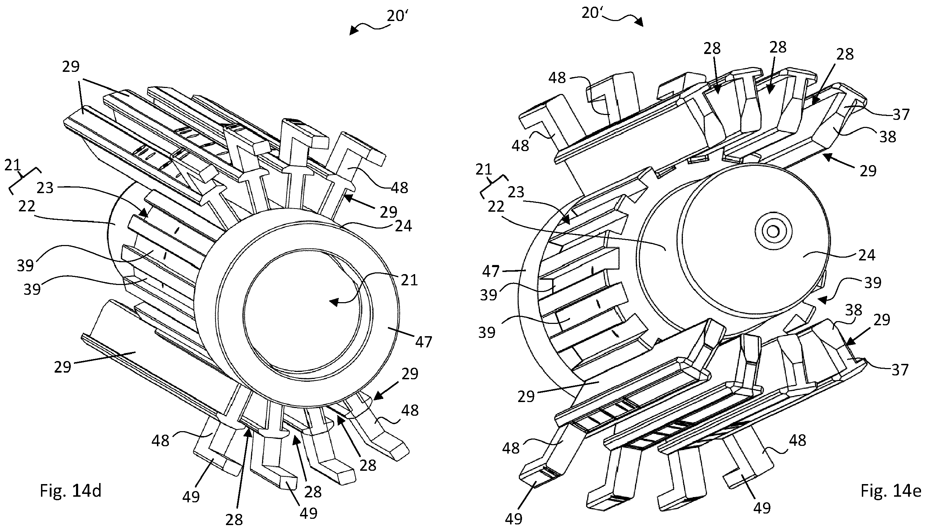

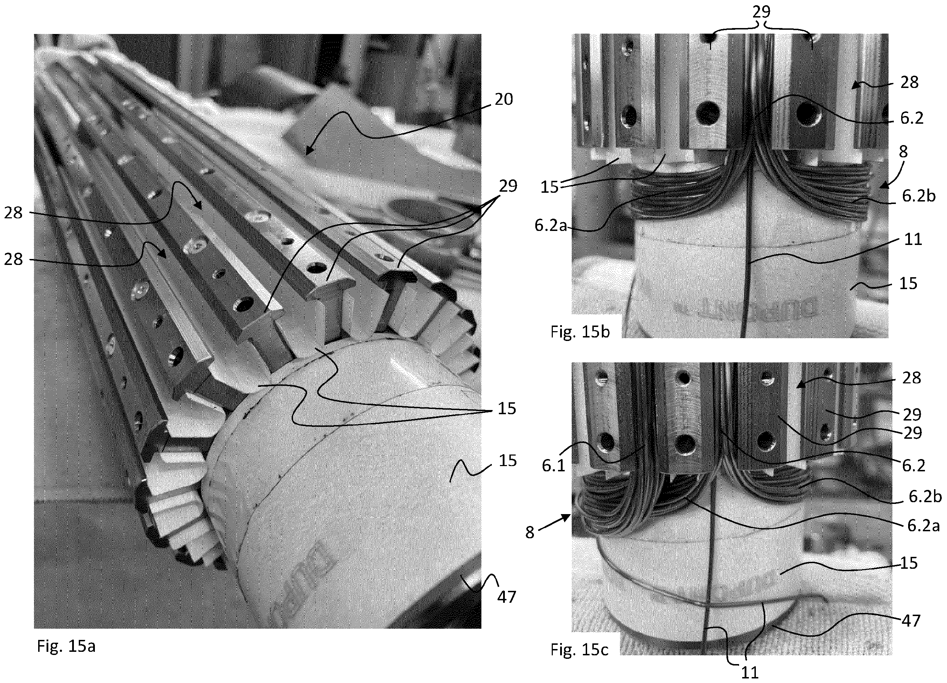

Ein weiteres Verfahren zur Herstellung des Spulenkörpers 5 besteht darin, die einzelnen Spulen mit einem Nadelwickler innerhalb eines Wickelträgers zu wickeln und anschließend in diesem Wickelträger zu vergießen. Ein diesen Wickelträger bildendes Werkzeug 20' ist in den Fig. 14a-14e dargestellt. Fig. 15a-15c zeigen das Werkzeug 20' in der Praxis.

Der Aufbau des Werkzeugs 20' entspricht im Wesentlichen demjenigen des Einziehund Vergusswerkzeugs 20 in den Fig. 9a bis 9c, so dass auf die Ausführungen zu diesen Figuren verwiesen wird. Nachfolgend werden lediglich die Unterschiede angesprochen. So fehlt es dem Wickelwerkzeug 20' gegenüber dem Einziehwerkzeug 20 verfahrensbedingt an dem ersten, zweiten und dritten Stempel 25, 26, 27. Das Wickelwerkzeug 20' umfasst ebenfalls einen Wickelträger 21 mit einem vorderen Wickelträgerabschnitt 22 und einem hinteren Wickelträgerabschnitt 23, wobei der vordere Wickelträgerabschnitt 23 einen geringeren Durchmesser, als der hintere Wickelträgerabschnitt 23 aufweist, so dass der vordere Wickelträgerabschnitt 23 gegenüber dem hinteren Wickelträgerabschnitt 23 unter Bildung eines Ringraums zurückspringt, der zur Aufnahme des ersten Wickelkopfs 7 dient. Das vordere Axialende 35 des Wickelträgers 21 hat einen Konus 24, und das hintere Axialende 36 hat einen Zapfen 40. Auf dem Zapfen 40 ist eine Montagehülse 47 formschlüssig aufgesetzt, auf die der zweite Wickelkopf 8 gewickelt wird. Die Montagehülse 47 steht radial gegenüber dem hinteren Wickelträgerabschnitt 23 vor.

Der hintere Wickelträgerabschnitt 23 weist über den Umfang äquidistant verteilte, parallele Längsnuten 39 zur Aufnahme von Lamellen 29 auf, von denen in Fig. 14a-14e lediglich diejenigen montiert sind, die zum Wickeln einer einzigen Phase benötigt werden. Genauer betrachtet, sind hier acht Lamellen 29 in Gruppen zu je vier Lamellen 29 montiert, die sich in Winkelabschnitten α1, α2 gegenüberliegen. Zwischen zwei in Umfangsrichtung benachbarten Lamellen 29 besteht wie zuvor jeweils ein Längshohlraum 28. Die Lamellen 29 erstrecken sich zum vorderen Axialende 35 über den hinteren Wickelträgerabschnitt 23 hinaus, so dass sie unter Bildung des zuvor genannten Ringraums radial beabstandet zum vorderen Wickelträgerabschnitt 22 liegen.

Die Lamellen 29 sind im Querschnitt im Gegensatz zum dargestellten Einziehwerkzeug 20 T-förmig, so dass die Nutöffnung schmaler als die Nutbreite im Inneren der Längshohlräume 28 ist. Dies reduziert das Risiko, dass der Wickeldraht aus einem Längshohlraum 28 heraustritt. Die zu einander gerichteten Längskanten der Lamellen 29 sind gefast, wodurch ein etwaig ungenau gewickelter Draht dennoch entlang der zum Längshohlraum geneigten Abflachung in den Längshohlraum 28 rutscht. Gefast sind außerdem sämtliche weiteren Kanten der Lamellen 29 an ihrer dem Konus 24 gegenüberliegenden Stirnseite.

Seitens des hinteren Axialendes 36 ist auf jede Lamelle 29 ein Rückhalteelement 48 radial außen montiert, insbesondere geschraubt. Jedes Rückhalteelement 48 umfasst einen Finger 49, der sich in axialer Richtung erstreckt und radial weiter außen liegt, als die entsprechende Lamelle 29.

Das Bewickeln des Wickelträgers 21 erfolgt mit einem Nadelwickel, die der Wickeldraht kontinuierlich unter einer Zugspannung ausgibt, wobei der Nadelwickler und der Wickelträger 21 relativ zueinander beweglich sind und zwar bidirektional in mindestens 3 Raumrichtungen, nämlich axial, radial und in Umfangsrichtung.

Vor dem Bewickeln werden die Längshohlräume 28 mit einem Isolationspapier 15 ausgekleidet. Wie Fig. 15a erkennen lässt, ist dieses Isolationspapier 15 U-förmig gefaltet und steht am hinteren axialen Ende 36 der Längshohlräume 28 vor, um einen seitlichen Kontakt des Wickeldrahtens mit den Lamellen 29 zu verhindern. Die T-Form der Lamellen 29 verhindert hierbei ein Herausrutschen des Isolationspapiers 15, das mit seinen Längsseiten gegen die Innenseite der in Umfangsrichtung vorstehenden Vorsprünge der T-Lamellen 29 stößt. Fig. 15a lässt außerdem erkennen, dass die Montagehülse 47 mit einem Isolationsmaterial 15 ummantelt ist.

Das Wickeln einer Spule 6 in dem Werkzeug 20' erfolgt nun in an sich bekannter Weise beispielsweise derart, dass wiederholt
a) der Wickeldraht durch eine axiale lineare Bewegung des Nadelwicklers vom hinteren Axialende 36 in Längsrichtung des Wickelträgers 21 parallel zur Vorrichtungsachse 44 zum vorderen Axialende 35 in einen ersten radial nach außen offenen Längshohlraum 28 eingezogen wird, aus dem der Draht am Ende der ersten axialen Bewegung axial austritt,
b) der Wickelträger 21 mit einer ersten Drehbewegung um die Achse 44 gedreht wird, bis der Nadelwickler in der Flucht eines bestimmten zweiten Längshohlraums steht, in den der Wickeldraht einzuziehen ist,
c) der Wickeldraht durch eine zweite lineare Bewegung des Nadelwicklers zurück vom vorderen Axialende 35 in Längsrichtung des Wickelträgers 21 parallel zur Vorrichtungsachse 44 zum hinteren Axialende 35 in den zweiten radial nach außen offenen Längshohlraum 28 eingezogen wird, aus dem der Draht am Ende der zweiten axialen Bewegung axial austritt, und
d) der Wickelträger 21 mit einer zweiten Drehbewegung um die Achse 44 zurückgedreht wird, bis der Nadelwickler wieder in der Flucht des ersten Längshohlraums steht, in den der Wickeldraht einzuziehen ist.

Vor der ersten Drehbewegung in Schritt b) kann gegebenenfalls eine lineare Bewegung des Nadelwicklers in Richtung der Werkzeugachse stattfinden, um den Wickeldraht radial nach innen zu ziehen. In entsprechender Weise kann nach der ersten Drehbewegung in Schritt b) gegebenenfalls eine lineare Bewegung des Nadelwicklers in Richtung von der Werkzeugachse weg stattfinden, um den Wickeldraht radial nach außen zu ziehen. Die beiden Radialbewegungen sind dann erforderlich, wenn die Drehbewegung in Schritt b) um einen vergleichsweise kleinen Winkel erfolgt, so dass die Flucht einer oder mehrerer Lamellen 29 auf einer Verbindungsgeraden zwischen dem Startpunkt und dem Endpunkt der Drehbewegung liegt. Denn in diesem Fall besteht die Gefahr, dass sich der Wickeldraht bei der ersten Drehbewegung und zweiten Linearbewegung nicht richtig in den Ringraum legt.

Die vorgenannten Bewegungen werden entsprechend der einzuziehenden N Windungen, aus denen eine Spule 6 gebildet werden soll, wiederholt. Die vorgenannten Bewegungen können selbstverständlich auch durch das jeweils andere Teil, im Sinne einer kinematischen Richtungsumkehr, ausgeführt werden.

Durch die Summe der ersten axialen Bewegungen wird der erste Längsspulenabschnitt 6a einer Spule 6, durch die Summe der zweiten axialen Bewegungen der zweite Längsspulenabschnitt 6b gelegt. Ferner wird durch die Summe der ersten Drehbewegungen der erste Wickelkopfabschnitt 6c und durch die Summe der zweiten Drehbewegungen der zweite Wickelkopfabschnitt 6d der Spule 6 gelegt.

Durch den Konus 24 am Kopf des Wickelträgers 21 samt der Lamellen 29 wird automatisch erreicht, dass sich der erste Wickelkopfabschnitt 6c innerhalb des Ringraums zwischen den Lamellen 29 und dem vorderen Wickelträgerabschnitt 22 ausbildet, d.h. radial nach innen gegenüber den Zähnen 3 des Statorpakets, denen quasi die Lamellen 29 entsprechen, versetzt ist. Der zweite Wickelkopfabschnitt 6d wird demgegenüber axial vor den Lamellen 29 gebildet, so dass er später axial vor den Statorzähnen 3 liegt.

Das Wickelkonzept, genauer gesagt die Zuordnung der Längshohlräume 28 zu den einzelnen Spulen, erfolgt wie zuvor in Bezug auf Fig. 1c und Fig. 12a, 13f erläutert. So wird die zweite Spule 6.2 einer Phase in diametral gegenüberliegende Längshohlräume 28 gewickelt und auf zwei Teilspulen 6.2a, 6.2b aufgeteilt, die in unterschiedliche Umfangsrichtungen vom einen zum anderen Längshohlraum geführt werden, um symmetrische Wickelköpfe 7, 8 zu erhalten. Dies veranschaulicht Fig. 15b mit Blick auf den zweiten Wickelkopf 8, der hier allerdings zunächst nur aus dieser zweiten Spule 6.2 besteht.

Das Ende und der Anfang des Wickeldrahts 11 der zweiten Spule sind ebenfalls zu sehen. Das Wickeln der zweiten Spule 6.2 kann derart erfolgen, dass zunächst vollständig die erste Teilspule 6.2a und anschließend vollständig die zweite Teilspule 6.2b gewickelt wird, d.h. zunächst alle N/2 Windungen in derselben Richtungsabfolge hergestellt werden. Alternativ kann abwechselnd eine Windung der ersten Teilspule 6.2a und eine Windung der zweiten Teilspule 6.2b gewickelt werden.

Die beiden anderen Spulen 6.1, 6.3 der Phase werden dann nacheinander jeweils in diejenigen zwei Längshohlräume 28 gewickelt, die benachbart zu den Längshohlräumen 28 der zweiten Spule 6.2 innerhalb desselben Umfangshalbkreises liegen, vergleiche Fig. 1a, 13f. Fig. 15c zeigt die Vorrichtung 20' mit gewickelter erster und zweiter Spule 6.1, 6.2, wobei die erste Spule 6.1 im hier zu sehenden Bereich des zweiten Wickelkopfabschnitts 6d radial auf der ersten Teilspule 6.2a der ersten Spule 6.2 aufliegt.

In der dargestellten Weise können zunächst alle Spulen 6 aller Phasen gewickelt und anschließend gemeinsam vergossen werden. Bei diesem Vollverguss bildet das Spulenpaket 5 einen monolithischen Vergusskörper (Vollvergusskörper). Hierzu wird, wie in der Vorrichtung 20 gemäß Figuren 9a-9c ein Deckel 32 auf die Montagehülse 47 aufgeschoben, eine die Lamellen 29 einfassende, zylindrische erste Hülse 30 auf die Lamellen 29 geschoben und ferner die zylindrische zweite Hülse 31 über den Deckel 32 und den zweiten Wickelkopf 8 geschoben. Anschließend wird das auf diese Weise ergänzte Wickelwerkzeug 20' mit Vergussmasse gefüllt.

Gemäß einer Alternative werden nur die Spulen 6 einer einzigen Phase U, V, W gewickelt und anschließend vergossen und dies für jede Phase wiederholt, so dass pro Phase ein Teilvergusskörper entsteht. Bei diesem Teilverguss bildet das Spulenpaket 5 somit einen mehrteiligen Vergusskörper. Die einzelnen Teilvergusskörper werden axial zusammengeschoben, um das Spulenpaket 5 zu bilden. Diese Ausführungsvariante hat den Vorteil, dass die Entformung der Teilvergusskörper mit einem geringeren Kraftaufwand möglich ist, als die Entformung des Vollvergusskörpers und die Kraftbeanspruchung der Komponenten insgesamt geringer ist. Für alle Teilvergusskörper kann dasselbe Werkzeug 20' verwendet werden.

Allerdings führt die Ausführungsvariante mit Teilvergusskörpern zu einem axial größeren Bauraum der Wickelköpfe 7, 8 von mehreren Millimetern, weil jeder Wickelkopf 7, 8 an seinen beiden axialen Stirnseiten jeweils eine Isolationsschicht aus Vergussmaterial mit 1-2mm Dicke aufweist, die sich durch das aufeinanderstapeln der Teilvergusskörper addiert. Der monolithische (einstückige) Vergusskörper hat demgegenüber bei gleicher Leistung bzw. Leistungsdichte einen geringeren axialen Bauraum bei den Wickelköpfen (bis zu 1,6cm insgesamt), weil die Spulen dort dicht bzw. ohne Zwischenisolation, aneinander liegen, weshalb ein als Vollvergusskörper hergestelltes Spulenpaket 5 eine bessere Performance aufweist.

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls", "geeignet" oder dergleichen angegeben sind, sind als rein fakultativ zu betrachten und schränken ebenfalls den Schutzbereich nicht ein, welcher ausschließlich durch die Ansprüche festgelegt ist. Soweit in der vorstehenden Beschreibung Elemente, Komponenten, Verfahrensschritte, Werte oder Informationen genannt sind, die bekannte, naheliegende oder vorhersehbare Äquivalente besitzen, werden diese Äquivalente von der Erfindung mit umfasst. Ebenso schließt die Erfindung jegliche Änderungen, Abwandlungen oder Modifikationen von Ausführungsbeispielen ein, die den Austausch, die Hinzunahme, die Änderung oder das Weglassen von Elementen, Komponenten, Verfahrensschritte, Werten oder Informationen zum Gegenstand haben, solange der erfindungsgemäße Grundgedanke erhalten bleibt, ungeachtet dessen, ob die Änderung, Abwandlung oder Modifikationen zu einer Verbesserung oder Verschlechterung einer Ausführungsform führt.

Obgleich die vorstehende Erfindungsbeschreibung eine Vielzahl körperlicher, unkörperlicher oder verfahrensgegenständlicher Merkmale in Bezug zu einem oder mehreren konkreten Ausführungsbeispiel(en) nennt, so können diese Merkmale auch isoliert von dem konkreten Ausführungsbeispiel verwendet werden, jedenfalls soweit sie nicht das zwingende Vorhandensein weiterer Merkmale erfordern. Umgekehrt können diese in Bezug zu einem oder mehreren konkreten Ausführungsbeispiel(en) genannten Merkmale beliebig miteinander sowie mit weiteren offenbarten oder nicht offenbarten Merkmalen von gezeigten oder nicht gezeigten Ausführungsbeispielen kombiniert werden, jedenfalls soweit sich die Merkmale nicht gegenseitig ausschließen oder zu technischen Unvereinbarkeiten führen.

## Patentansprüche

1. Verfahren zur Herstellung eines Spulenpakets (5) eines Elektromotors für eine Bohrlochpumpe mit einem Statorpaket (1), das eine Statorbohrung (9) zur Aufnahme eines Rotors (13) und radial nach Innen offene Nuten (4, 4a) aufweist, die jeweils durch einen Statorzahn (3) voneinander getrennt sind und in denen elektrische Leiter (11) von Spulen (6) des Spulenpakets (5) einliegen, die verteilte Wicklungen und an einem axialen Ende des Spulenpakets (5) einen Wickelkopf (7) bilden, **dadurch gekennzeichnet, dass** das Spulenpaket (5) durch Formung und Vergießen der Spulen (6) innerhalb eines Werkzeugs (50, 51) derart hergestellt wird, dass sich der Wickelkopf (7) nur zwischen einem inneren Durchmesser (dᵢ) und einem äußeren Durchmesser (dₐ) erstreckt, der kleiner als der Durchmesser (D_{b}) der Statorbohrung (9) ist, um ein axiales Einfügen des Spulenpakets (5) in das Statorpaket (1) mit voreilendem Wickelkopf (7) zu ermöglichen, wobei die Spulen (6) jeweils einzeln gewickelt und als Drahtbündel in das Werkzeug (50, 51) eingezogen und darin vergossen werden.

2. Verfahren nach Anspruch 1, **dadurch gekennzeichnet, dass** das Werkzeug (50, 51) einen Wickelträger (51) umfasst, der einen zentralen Führungszylinder (52) und beabstandet zu diesem angeordnete, den Statorzähnen (3) anzahlmäßig korrespondierende Lamellen (59) aufweist, so dass zwischen dem Führungszylinder (52) und den Lamellen (29) ein Ringraum besteht, der in axialer Richtung zu einem Einführende (65) offen ist, um wenigstens eine in Form eines Drahtbündels gewickelte Spule aufzunehmen und im Ringraum einen Wickelkopfabschnitt der Spule zu formen, wobei zwischen zwei in Umfangsrichtung benachbarten Lamellen (59) jeweils ein Längshohlraum (58) besteht, um jeweils einen Längsspulenabschnitt der Spule zu formen, und
a. eine Spule (6) von dem Einführende (65) aus in den Ringraum (71) derart eingebracht wird, dass sie sich radial durch einen ersten der Längshohlräume (58) in den Ringraum (71) hineinerstreckt, bogenförmig zu einem zweiten Längshohlraum (58) verläuft und radial aus diesem wieder austritt,
b. die Spule (6) anschließend mit einem in den Ringraum (71) einfahrenden, hohlzylindrischen, auf dem Führungszylinder (52) geführten Pressstempel (56) vom Einführende (65) weg zum gegenüberliegenden zweiten Axialende (66) geschoben wird, um dort den im Wickelkopf (7) liegenden Wickelkopfabschnitt (6c) der Spule (6) auszubilden,
c. anschließend ein Einziehmittel (70, 80), insbesondere ein Einziehtrichter (70) vom zweiten Axialende (66) radial außen an den Lamellen (59) entlang zum Einführende (65) bewegt wird, um die Spule (6) hochzuklappen und in den ersten und zweiten Längshohlraum (58) zu drücken, bis das Einführende (65) erreicht ist, wo sie sich zunehmend spannend außenumfänglich um die Lamellen (29) legt, um einen einen zweiten Wickelkopf (8) mitbildenden zweiten Wickelkopfabschnitt (6d) der Spule (6) auszubilden.

3. Verfahren nach Anspruch 2, **dadurch gekennzeichnet, dass** Schritt a. zunächst für mehrere oder alle Spulen (6) wiederholt und Schritte b. und c. anschließend für alle Spulen (6) gemeinsam ausgeführt werden.

4. Verfahren nach Anspruch 2 oder 3, **dadurch gekennzeichnet, dass** eine Hülse (72) vom zweiten Axialende (66) aus axial über die Lamellen (29) zum Einführende (65) geschoben wird, die in einer Endposition den zweiten Wickelkopf (8) radial begrenzt, um für diesen eine Gießform zu bilden.

5. Verfahren nach einem der Ansprüche 2 bis 4, **dadurch gekennzeichnet, dass** eine Verspannungsmechanik (90) mit einer der Anzahl an Längshohlräumen (58) entsprechenden Anzahl an Verschlussstangen (91), insbesondere axial, in die Längshohlräume (58) einfährt, um diese zur Bildung einer Gießform zu verschließen.

6. Verfahren nach Anspruch 5, **dadurch gekennzeichnet, dass** wenigstens ein Spannring (93, 94) der Verspannungsmechanik (90) die Verschlussstangen (91) gemeinsam radial in die Längshohlräume (58) drückt.

7. Verfahren nach einem der Ansprüche 1 bis 6, **dadurch gekennzeichnet, dass** der Führungszylinder (52) seitens des Einführendes (65) einen drehbaren Exzenterkonus (54) aufweist, dessen Mantelfläche auf einer Seite steiler als auf der gegenüberliegenden Seite ist, wobei der Exzenterkonus (54) für das Einbringen der Spule (6) in den Wickelträger (51) in eine Position gedreht wird, in der die weniger steile Seite des Exzenterkonus (54) dem gewünschten bogenförmigen Verlauf der Spule (6) im Ringraum vom ersten zum zweiten Längshohlraum (58) zugewandt ist.

8. Verfahren nach einem der vorhergehenden Ansprüche, **dadurch gekennzeichnet, dass** die Spule (6) oberhalb des Werkzeugs (50, 51) mittels eines Flyerwicklers zu dem Drahtbündel gewickelt und anschließend in das Werkzeug (50, 51) fallengelassen wird.

9. Werkzeug (50, 51) zur Herstellung eines Spulenpakets (5) aus verteilten Wicklungen zum axialen Einsetzen in ein Statorpaket (1) eines Elektromotors, das radial nach Innen offene Nuten (4, 4a) aufweist, die jeweils durch einen Statorzahn (3) voneinander getrennt sind, umfassend einen Wickelträger (51), der einen zentralen Führungszylinder (52) und beabstandet zu diesem angeordnete, den Statorzähnen (3) anzahlmäßig korrespondierende Lamellen (59) aufweist, so dass zwischen dem Führungszylinder (52) und den Lamellen (29) ein Ringraum besteht, der in axialer Richtung zu einem Einführende (65) offen ist, um wenigstens eine in Form eines Drahtbündels gewickelte Spule (6) aufzunehmen und im Ringraum einen Wickelkopfabschnitt der Spule zu formen, wobei zwischen zwei in Umfangsrichtung benachbarten Lamellen (59) jeweils ein Längshohlraum (58) besteht, um jeweils einen Längsspulenabschnitt der Spule zu formen.

10. Werkzeug (50, 51) nach Anspruch 9, **gekennzeichnet durch** einen in den Ringraum (71) einfahrbaren, hohlzylindrischen und auf dem Führungszylinder (52) geführten Pressstempel (56), um die Spule(n) (6) zu dem dem Einführende (65) gegenüberliegenden zweiten Axialende (66) zu schieben und dort einen einen ersten Wickelkopf (7) des Spulenpakets (5) mitbildenden ersten Wickelkopfabschnitt (6c) der Spule(n) (6) auszubilden.

11. Werkzeug (50, 51) nach Anspruch 9 oder 10, **gekennzeichnet durch** ein Einziehmittel (70), das radial außen an den Lamellen (59) entlanggleitend zum Einführende (65) bewegbar ist, um die Spule(n) (6) hochzuklappen.

12. Werkzeug (50, 51) nach Anspruch 11, **dadurch gekennzeichnet, dass** das Einziehmittel (70) einen Einziehtrichter (70) umfasst.

13. Werkzeug (50, 51) nach einem der Ansprüche 9 bis 12, **gekennzeichnet durch** eine Hülse (72), die außen über die Lamellen (29) zum Einführende (65) in eine Endposition schiebbar ist, um in dieser Endposition einen zweiten, einen zweiten Wickelkopf (8) mitbildenden Wickelkopfabschnitt (6d) der Spule(n) (6) zur Bildung einer Gießform zu umgreifen.

14. Werkzeug (50, 51) nach einem der Ansprüche 9 bis 13, **gekennzeichnet durch** eine Verspannungsmechanik (90) mit einer der Anzahl an Längshohlräumen (58) entsprechenden Anzahl an Verschlussstangen (91), die, insbesondere axial, in die Längshohlräume (58) einfahrbar sind, um diese zur Bildung einer Gießform zu verschließen.

15. Werkzeug (50, 51) nach Anspruch 14, **dadurch gekennzeichnet, dass** die Verspannungsmechanik (90) wenigstens einen Spannring (93, 94) aufweist, um die Verschlussstangen (91) gemeinsam radial in die Längshohlräume (58) zu drücken.

16. Werkzeug (50, 51) nach einem der Ansprüche 9 bis 15, **dadurch gekennzeichnet, dass** der Führungszylinder (52) seitens des Einführendes (65) einen drehbaren Exzenterkonus (54) aufweist, dessen Mantelfläche auf einer Seite steiler als auf der gegenüberliegenden Seite ist.

17. Werkzeug (50, 51) nach einem der Ansprüche 9 bis 16, **dadurch gekennzeichnet, dass** das Einziehmittel (70, 80) eine den Wickelträger (51) zum Einführende (65) entlang schiebbare Pressring-Aktorik (80) umfasst, die eine der Anzahl der Längshohlräume (58) entsprechende Anzahl ringförmig angeordneter Gleitstempel (84) aufweist, so dass jeder Gleitstempel (83) in einen der Längshohlräume (58) hineinragt, um die Spule(n) (6) radial in den ersten und zweiten Längshohlraum (58) zu drücken.

18. Werkzeug (50, 51) nach Anspruch 17, **dadurch gekennzeichnet, dass** sich jeder Gleitstempel (83) an einem Dämpfungsblock (81) abstützt, zu dem er radial beweglich ist, wobei die Gleitstempel (83) entgegen einer Rückstellkraft in die Dämpfungsblöcke (81) hineingedrückt werden können.
